# EUROPÄISCHE PATENTSCHRIFT

(11) **EP 3 486 810 B1**
(45) Veröffentlichungstag und Bekanntmachung des Hinweises auf die Patenterteilung: **30.09.2020**
(21) Anmeldenummer: 18000932.6
(22) Anmeldetag: 10.01.2008
(51) Int. Cl.: G06F 30/00, G06F 30/17, G06F 111/20

(54) **VERFAHREN ZUR ERZEUGUNG EINER KONSTRUKTIONSZEICHNUNG, VERFAHREN ZUM HERSTELLEN EINES ERZEUGNISSES UND VERWENDUNG DES VERFAHRENS, RECHNERSYSTEM UND VERWENDUNG VON GRAPHEN**
METHOD FOR PRODUCING A CONSTRUCTION DRAWING, METHOD FOR PRODUCING A PRODUCT AND USE OF THE METHOD, COMPUTER SYSTEM AND USE OF GRAPHS
PROCÉDÉ DE PRODUCTION D'UN DESSIN D'EXÉCUTION, PROCÉDÉ DE FABRICATION D'UN PRODUIT ET UTILISATION DU PROCÉDÉ, SYSTÈME INFORMATIQUE ET UTILISATION DE GRAPHES

(30) Priorität: 07.02.2007 DE 102007006808
(43) Veröffentlichungstag der Anmeldung: 22.05.2019
(62) Teilanmeldung aus: 08701059.1
(73) Patentinhaber: SEW-EURODRIVE GmbH & Co. KG, 76646 Bruchsal (DE)
(72) Erfinder: Schell, Gerhard, D-75053 Gondelsheim (DE)
(74) Vertreter: Tüngler, Eberhard

(56) Entgegenhaltungen:
- EP-A- 1 447 760
- US-A- 5 434 791
- US-A1- 2003 067 487
- T.L. DE FAZIO, D.E. WHITNEY: "Simplified Generation of All Mechanical Assembly Sequences", IEEE JOURNAL OF ROBOTICS AND AUTOMATION, Bd. RA-3, Nr. 6, Dezember 1987 (1987-12), Seiten 640-658, XP002512697,

## Beschreibung

Die Erfindung betrifft ein Rechnersystem, eine Verwendung von Graphen, ein Verfahren zur Erzeugung einer Konstruktionszeichnung, ein Verfahren zur Herstellung eines Erzeugnisses und eine Verwendung des Verfahrens.

Aus der EP 1 251 444 B1 ist ein Verfahren zur Konfigurierung eines Produkts oder einer Produktkombination auf einem PC bekannt, bei dem die Darstellung der Produkte zu Laufzeit generiert und bei erfolgter Umkonstruktion durch ein CAD-Programm visuell angepasst wird.

Aus der Produktdokumentation der CAD-Standardsoftware SolidWorks2006 ist Mustern als ein spezieller Kopiervorgang bekannt. Aus dieser Produktdokumentation sind weiter Verknüpfungen bekannt zur gegenseitigen Ausrichtung von CAD-Zeichnungen.

Aus der DIN-Vornorm DIN-V 4002-2 sind Merkmale und Referenzhierarchie zum Produktdatenaustausch bekannt, insbesondere die Begriffe Objekt und Objektklasse zur Beschreibung einer hierarchischen Gliederung.

Aus der DIN-ISO 6433 sind Positionsnummern bekannt, die in technischen Zeichnungen Einzelteilen oder Gruppen zugeordnet sind.

Aus dem Nachschlagewerk Wikipedia, insbesondere aus dem Stichwort "Graphentheorie" der deutschsprachigen Ausgabe in der Version 3. Januar 2007, 13:16 Uhr, sind gerichtete Graphen mit Knoten und gerichteten Kanten, Wege, Zyklen und Kreise sowie Durchmesser von Graphen bekannt zur Beschreibung von Graphen.

Aus dem Nachschlagewerk Wikipedia, deutschsprachige Ausgabe, unter dem Stichwort "Liste mechanischer CAD-Lösungen" in der Version vom 29. November 2006, 12:26 Uhr, ist CAD-Standardsoftware bekannt.

Aus dem Nachschlagewerk Wikipedia, deutschsprachige Ausgabe, unter dem Stichwort "Produktkonfigurator" in der Version vom 22. Dezember 2006, 15:01 Uhr, ist ein Konfigurator bekannt, mit dem Produkte kundenindividuell erzeugbar sind.

Der Erfindung liegt die Aufgabe zugrunde, ein Verfahren zur Herstellung einer Konstruktionsvariante eines Getriebes weiterzubilden, mit dem CAD-Zeichnungen von Konstruktionsvarianten einer Baureihe erstellbar sind und bei dem Verfahren zum Herstellen eines Getriebes nach den in Anspruch 1 angegebenen Merkmalen verwendet werden.

Wichtige Merkmale eines Verfahrens zum Herstellen eines Getriebes einer Baureihe unter Verwendung einer Datenverarbeitungsanlage, wobei das Getriebe aus Bauteilen eines Baukastens zusammengesetzt ist und aus den Bauteilen des Baukastens weitere Varianten von Getrieben herstellbar sind, sind in Anspruch 1 und den von Anspruch 1 abhängigen Ansprüchen niedergelegt.

Die Bauteile können vorteilhaft als 3D-Modelle und/oder mit kennzeichnenden Daten wie Abmessungen und/oder Materialwahl und/oder begrenzenden Kennzahlen/Belastungswerten in einer Datenbank abgelegt sein. Als Hilfsfiguren sind beispielsweise mathematisch gedachte Achsen, Ebenen, regelmäßige Flächen oder Körper verwendbar. Die Hilfsfiguren werden vorzugsweise durch die Symmetrie oder eine näherungsweise vorliegende Symmetrie des betreffenden Bauteils ausgezeichnet oder durch physikalische Grenzlinien oder Grenzflächen, beispielsweise durch Materialgrenzen, des Bauteils bestimmt. Die Hilfsfiguren sind somit vorzugsweise Merkmale, die ein Monteur beim tatsächlichen Zusammenbau zur Ausrichtung der Bauteile relativ zueinander, beispielsweise durch Fluchten oder Anlegen, als Bezugsobjekt verwendet. Die Hilfsfiguren sind vorzugsweise als markierte oder bezeichnete Ebenen, Flächen, Körper oder Achsen im 3D-Modell des Bauteils hinterlegt oder in einer Datenbank mit Bezug auf das zugehörige Bauteil abgespeichert oder zugeordnet. Die Verwendung von Symmetrieachsen als Hilfsfiguren ist besonders vorteilhaft bei der Konfiguration und Herstellung von Getrieben verwendbar, da Getriebe in der Regel eine große Anzahl rotierender Bauteile aufweisen, wobei die Rotierbarkeit eine Drehsymmetrie bedingt, bezüglicher deren Symmetrieachse beim Einbau die Ausrichtung zu erfolgen hat. Statt der Symmetrieachse ist auch eine Zylindermantelfläche, die die Symmetrieachse konzentrisch umgibt, beispielsweise eine physikalische Oberfläche des Bauteils, verwendbar. Die Verwendung von Ebenen als Hilfsfiguren, oder einen endlichen, also vorzugsweise auf die Ausdehnung des Bauteils begrenzten, Ausschnitts hiervon, ist allgemein bei Baureihen vorteilhaft, bei denen der Zusammenbau ein Ausrichten der Bauteile durch Auflegen oder Anlegen oder Aufreihen erfolgt. Dieses Anlegen oder Auflegen oder Aufreihen erfolgt vorzugsweise durch parallele oder sogar deckungsgleiche Ausrichtung. Besonders vorteilhaft sind bei Getriebebaureihen Ebenen verwendbar, die eine axiale Festlegung von rotierenden Teilen auf oder an anderen rotierenden Teilen beschreiben, beispielsweise an Schultern, Wellenringen, Lagerringen und dergleichen Anschlägen. Mit den Regeln sind diese Hilfsfiguren zweier Bauteile zueinander in Bezug bringbar, wobei die Regeln eine Zerlegung der Schritte beim Zusammenbau in Elementarschritte darstellen, die auf einem Rechnersystem implementierbar und ohne menschlichen Eingriff ausführbar, also anwendbar, sind. Werden diese -Regeln auf die Bauteilverwendungskennzeichen bezogen und nicht etwa auf die einzelnen Bauteile selbst, so wird nicht nur die Zahl der überhaupt notwendigen Regeln drastisch reduziert, sondern es wird überhaupt erst möglich, ein und dasselbe Bauteil, beispielsweise eine bestimmte Normschraube, je nach gewünschter Variante der Baureihe an verschiedenen Positionen, also mit unterschiedlichen Verwendungen, vorzusehen. Somit ist die Erfindung besonders vorteilhaft bei Baureihen verwendbar, bei denen der Baukasten aller Bauteile und insbesondere die einzelnen Varianten derart gestaltet, ausgelegt und konstruiert ist, dass ein hoher Grad der Wiederverwendung der Bauteile und daher eine geringe Gesamtzahl der Bauteile des Baukastens bei hoher Variantenvielfalt erreicht sind. Ein Beispiel hierfür stellen Getriebebaureihen dar, bei denen ein bestimmtes Verzahnungsteil in jeweils unterschiedlichen Stufen oder an unterschiedlichen Positionen der Varianten zur Bildung von Varianten mit unterschiedlichen Übersetzungszahlen, Drehmomentklassen, Stufenzahlen und/oder An- beziehungsweise Abtriebswellenarten eingesetzt wird. Nachdem das erfindungsgemäße Verfahren durch die beschriebene Eingabe der Regeln und/oder der Datenbank der Bauteile mit Hilfsfiguren, das vorzugsweise mit Eingabemitteln wie Tastaturen und/oder Lesegeräten für Massenspeicher und/oder Herstellen einer Datenfernübertragungsverbindung erfolgt, vorbereitet ist, bietet die Erfindung den Vorteil, dass aus jeder Stückliste vollautomatisiert die betreffende Variante herstellbar ist. Hierbei kann die beschriebene Kollisionsprüfung darin bestehend, dass ein Rechnersystem sukzessive und iterativ die Möglichkeit eines kollisionsfreien Entfernens der Bauteile aus der zusammengebauten, beispielsweise als 3D-Modell vorliegenden, Variante prüft und die Bauteile gegebenenfalls sukzessive entfernt, wobei die Reihenfolge der entfernten Bauteile gespeichert wird. Das Steuerungsgerät des Handhabungsgeräts verfügt vorzugsweise über Mittel, dreidimensionale Abbilder der Variante während des Zusammenbaus zu berechnen oder zu verarbeiten, wobei für die jeweils einzubauenden Bauteile ein möglicher Einbauweg ermittelt wird. Die hierzu erfindungemäß vorgeschalteten Schritte dienen der Festlegung der Einbaulage und stellen sicher, dass jeweils ein möglicher Einbauweg existiert. Die Erfindung ist somit insbesondere zur automatisierten Fertigung von Varianten einer Baureihe verwendbar, bei der die große Variantenvielfalt die vorbereitende Erstellung und Bereithaltung eines 3D-Modells oder Prototyp für jede Variante unmöglich macht.

Besonders günstig ist es also, wenn die Bauteile als 3D-Modelle abgespeichert sind und die Hilfsfiguren in den 3D-Modellen gekennzeichnet sind und/oder wenn nach Abarbeitung aller extrahierter Regeln im dritten Schritt das Getriebe als 3D-Modell aus den als 3D-Modell abgespeicherten Bauteilen zusammengebaut ist.

Bei einer vorteilhaften Ausgestaltung enthält die Stückliste zu jedem Stücklisteneintrag eine Information über die Verwendung des betreffenden Bauteils in der Konstruktionsvariante, insbesondere eine Objektklasse oder ein Bauteilverwendungskennzeichen, und die Ermittlung der Befehlssequenz erfolgt anhand der in dem Stücklisteneintrag gegebenen Information über die Verwendung des betreffenden Bauteils in der Konstruktionsvariante, insbesondere die Objektklasse oder das Bauteilverwendungskennzeichen. Von Vorteil ist dabei, dass eine Strukturierung geschaffen ist, die nachvollziehbar ist, da sie sich an physischen und/oder funktionalen Gegebenheiten der Konstruktionsvarianten der Baureihe orientiert. Dies erleichtert Pflege des Datenbestands und Fehlersuche.

Bei einer vorteilhaften Ausgestaltung wird die Befehlssequenz von einer CAD-Standardsoftware gelesen und ausgeführt, wobei diese CAD-Standardsoftware zur Darstellung der CAD-Zeichnung oder zur Berechnung des 3D-Modells der Konstruktionsvariante verwendet wird. Somit ist vorteilhaft die umfangreiche Funktionalität von CAD-Standardsoftware-Paketen nutzbar.

Bei einer vorteilhaften Ausgestaltung wird auf eine erste Datenbank zugegriffen, in der Informationen, insbesondere CAD-Zeichnungen, zu allen Bauteilen des Baukastens abgelegt sind, wobei jedes Bauteil durch eine Merkmalsmenge, insbesondere geometrische Hilfsfiguren in der jeweiligen CAD-Zeichnung, gekennzeichnet ist, und es wird auf eine zweite Datenbank zugegriffen, in der Objektklassen, insbesondere Bauteilverwendungskennzeichen, abgelegt sind, wobei jede Objektklasse durch eine Merkmalsmenge gekennzeichnet ist, wobei jeder Objektklasse mindestens ein Bauteil zuordenbar ist, wobei die Merkmalsmenge der Objektklasse eine Teilmenge der Merkmalsmenge des Bauteils ist, und es wird auf eine dritte Datenbank zugegriffen, in der Regeln abgelegt sind, wobei jede Regel jeweils zwei Objektklassen in Bezug setzt, insbesondere zwei Merkmale aus den jeweiligen Merkmalsmengen von Bauteilen, die den Objektklassen jeweils zuordenbar sind. Von Vorteil ist dabei, dass Datenbanken verwendet werden, welche die Strukturierung der Baureihe abbilden. Durch das Vorsehen von Regeln können die von einem technischen Zeichner beim Erstellen eines 3D-Modells vorgenommenen Arbeitsschritte in einem Rechnersystem abgebildet werden. Durch die Verwendung von Bauteilen und Objektklassen und die Zuordnung von Bauteilen zu Objektklassen sind die Konstruktionsvarianten als Graphen mit Knoten und Kanten kodierbar.

Bei einer vorteilhaften Ausgestaltung sind in der dritten Datenbank zu jeder Regel die zwei Objektklassen, die von der Regel in Bezug gesetzt werden, als ein erster und ein zweiter Eintrag für die Regel abgelegt. Somit ist vorteilhaft die Information über die Richtung der Kanten in der Regel ablegbar.

Bei einer vorteilhaften Ausgestaltung wird die Konstruktionsvariante mit einem Konfigurator erstellt und/oder konfiguriert wird, wobei der Konfigurator auf die zweite Datenbank zugreift und wobei die Konstruktionsvariante durch eine Stückliste beschrieben. Von Vorteil ist dabei, dass als Konfigurationswerkzeug eine Standardsoftware, ein Konfigurator, verwendbar ist, und dass dieser Konfigurator auf die Strukturierung der Baureihe mittels Objektklassen zugreifen kann und somit die Strukturierung der aktuellen Konstruktionsvariante in den Konfigurationsprozess einfließen lassen kann.

Bei einer vorteilhaften Ausgestaltung charakterisiert jede Objektklasse die Verwendung derjenigen Bauteile, die der Objektklasse zuordenbar sind, in den Konstruktionsvarianten der Baureihe eindeutig, insbesondere durch Verweis auf ein Bauteilverwendungskennzeichen. Von Vorteil ist dabei, dass sich die Strukturierung des Baukastens mittels Objektklassen an physisch und/oder funktional motivierten Gegebenheiten orientiert. Somit ist die bei jeder Konfiguration erfolgte Zuordnung eines Bauteils zu einer Objektklasse für einen menschlichen Nutzer lesbar und verständlich. Dies erleichtert beispielsweise Wartung und Fehlersuche.

Bei einer vorteilhaften Ausgestaltung wird in einem ersten Schritt aus einer ersten Datenbank die Bauteile für die Konstruktionsvariante ausgewählt werden und aus einer zweiten Datenbank für jedes ausgewählte Bauteil eine Objektklasse ausgewählt, insbesondere mittels eines Konfigurators, und es werden in einem zweiten Schritt von einem Rechnersystem aus einer dritten Datenbank die Regeln für die ausgewählten Objektklassen ermittelt und es werden in einem dritten Schritt von einem Rechnersystem anhand der ermittelten Regeln aus CAD-Zeichnungen oder 3D-Modellen der ausgewählten Bauteile eine CAD-Zeichnung oder ein 3D-Modell der Konstruktionsvariante erstellt. Von Vorteil ist dabei, dass ein Verfahren bereitgestellt ist, mit dem automatisiert, d.h. ohne menschlichen Eingriff, aus einem Ergebnis einer Konfiguration eine Zusammenbauzeichnung erstellbar ist.

Bei einer vorteilhaften Ausgestaltung definieren die ausgewählten Objektklassen und die ausgewählten Bauteile für die Konstruktionsvariante einen gerichteten Graphen, wobei die Kanten des Graphen die Objektklassen repräsentieren und die Knoten des Graphen jeweils das Bauteil repräsentieren, welches der durch die abgehende Kante repräsentierten Objektklasse zugeordnet ist. Vorzugsweise wird die Konstruktionsvariante durch einen Graphen, insbesondere einen kreisfreien Graphen, repräsentiert, wobei die Knoten des Graphen genau die in der Konstruktionsvariante eingesetzten Bauteile repräsentieren und die Kanten des Graphen physische Verbindungen zwischen den Bauteilen repräsentieren und mit einem System von Regeln aus der dritten Datenbank von einem auf dem Rechnersystem ausgeführten Montier-Modul und/oder Darstellungs-Modul jede Kante des Graphen in eine Abfolge von Verknüpfungsbefehlen für eine CAD-Standardsoftware übersetzt wird, insbesondere wobei die Verknüpfungsbefehle in eine bestimmte Reihenfolge gebracht werden, die das Entstehen von Mehrdeutigkeiten bei der Interpretation der Verknüpfungen vermeidet, insbesondere wobei die Reihenfolge auf die CAD-Standardsoftware zugeschnitten ist. Von Vorteil ist dabei, dass eine kompakte Kodierung von Konstruktionsvarianten bereitgestellt ist, aus der einfach und mit geringem Aufwand von einem Rechnersystem eine Zusammenbauzeichnung und/oder ein 3D-Modell erstellbar ist. Von Vorteil ist weiterhin, dass durch Verwendung von Verknüpfungsbefehlen und/oder Musterbefehlen die Funktionalität von CAD-Standardsoftware direkt nutzbar ist. Von Vorteil ist auch, dass mit dem Verfahren die Erstellung von Zusammenbauzeichnungen aus Einzelteilzeichnungen automatisierbar, d.h. ohne zusätzlichen menschlichen Eingriff ausführbar ist. Die Auswahl einer Abfolge für die Verknüpfungsbefehle bietet den Vorteil, Mehrdeutigkeiten beim Zusammenbau zu vermeiden. Führt beispielsweise die parallel Ausrichtung zweier im Wesentlichen senkrechter Achsen zu einer Mehrdeutigkeit bezüglich des Richtungssinns der parallelen Ausrichtung, also zu einer Unklarheit, ob parallele oder antiparallele Ausrichtung tatsächlich erreicht wird, so ist das Zwischenschalten eines Zwischenschrittes, beispielsweise Ausrichtung im Winkel 45°, vorteilhaft. Ein solcher Schritt ist aber vor dem endgültigen Ausrichtungsschritt auszuführen, weshalb die Festlegung einer Abfolge förderlich ist.

Bei einer vorteilhaften Ausgestaltung wird zur Erstellung der CAD-Zeichnung oder des 3D-Modells eine CAD-Standardsoftware verwendet, wobei in einem ersten Teilschritt des dritten Schrittes ein Rechnersystem die ermittelten Regeln sortiert und in einem zweiten Teilschritt des dritten Schrittes ein Rechnersystem die sortierten Regeln in Standard-Befehle der CAD-Standardsoftware übersetzt, insbesondere unter Beibehaltung der Sortierung, insbesondere wobei in der ersten Datenbank die CAD-Zeichnungen oder 3D-Modelle, insbesondere Einzelteilzeichnungen, aller Bauteile vorgehalten werden und die CAD-Standardsoftware auf diese erste Datenbank zugreift. Somit ist vorteilhaft ein Verfahren beschrieben, mit dem aus einer mit Zusammenbau-Regeln versehenen erweiterten Stückliste eine CAD-Zusammenbauzeichung oder ein 3D-Modell einfach und kostengünstig erstellbar ist. Die Zusammenbauzeichnung oder das 3D-Modell sind außerdem komfortabel weiter bearbeitbar.

Bei einer vorteilhaften Ausgestaltung werden von einem Montier-Modul im zweiten Schritt die folgenden Schritte zeitlich nacheinander durchlaufen werden:
a.i) für den obersten Stücklisteneintrag der Stückliste oder für den obersten zur CAD-Darstellung vorgesehenen Stücklisteneintrag der Stückliste aus der dritten Datenbank werden diejenigen Regeln ermittelt, deren erster Eintrag die Objektklasse des Stücklisteneintrags enthält, und in einer Unterliste zum Stücklisteneintrag speichert
a.ii) der Schritt a.i) wird mit dem nächstfolgenden Stücklisteneintrag oder mit dem nächstfolgenden zur CAD-Darstellung vorgesehenen Stücklisteneintrag wiederholt, bis alle Stücklisteneinträge bearbeitet sind.
Vorzugsweise werden von einem Montier-Modul im zweiten Schritt in einer Unterliste zu jedem Stücklisteneintrag alle diejenigen ermittelten Regeln eliminiert, für welche die Objektklasse des zweiten Eintrags für die Regel nicht in der Stückliste enthalten ist, insbesondere wobei entweder das Eliminieren im Anschluss an Schritt a.i) oder das Eliminieren für alle Unterlisten nach Bearbeitung aller Stücklisteneinträge erfolgt, und es werden die ermittelten und nicht eliminierten Regeln in einer Strukturliste gespeichert. Die nicht eliminierten Regeln der Strukturliste als ermittelte Regeln im dritten Schritt weiterbearbeitet. Somit ist vorteilhaft ein Verfahren angegeben, mit dem zu einer Stückliste die Zusammenbau-Regeln aus einer dritten Datenbank ermittelbar sind. Das Verfahren ist softwareseitig vorteilhaft in Form zweier verschachtelter Schleifen umsetzbar.

Bei einer vorteilhaften Ausgestaltung umfassen die in der ersten Datenbank abgelegten Merkmale zu jedem Bauteil Angaben zu geometrischen Hilfsfiguren in einer CAD-Zeichnung oder einem 3D-Modell dieses Bauteils zur räumlichen Ausrichtung des Bauteils. Von Vorteil ist dabei, dass die Festlegung der Merkmale nach physischen und/oder funktionalen Gesichtspunkten erfolgt. Somit ist das Verfahren, insbesondere die Befüllung der Datenbanken, übersichtlich ausgebildet. Vorzugsweise beschreiben die Regeln Verknüpfungen zwischen geometrischen Hilfsfiguren der Merkmalsmengen der betreffenden Objektklassen. Besonders vorzugsweise beschreibt jede Regel eine Verknüpfung zwischen zwei geometrischen Hilfsfiguren aus den Merkmalsmengen der betreffenden Objektklassen, insbesondere einen Verknüpfungsbefehl einer CAD-Standardsoftware. Durch die Verwendung von geometrischen Hilfsfiguren als Merkmale sind mit der Definition von Verknüpfungsregeln direkt die Arbeitsschritte eines technischen Zeichners bei der Arbeit mit einem CAD-Softwarepaket in einem Rechnersystem, insbesondere einem Computer, nachbildbar.

Bei einer vorteilhaften Ausgestaltung entsprechen die Verknüpfungen der Regeln Verknüpfungsbefehlen, wie sie in CAD-Standardsoftware verwendet werden und/oder es entsprechen die Verknüpfungen der Regeln Abfolgen von Verknüpfungsbefehlen, insbesondere Muster-Befehlen, wie sie in CAD-Standardsoftware verwendet werden. Vorzugsweise umfassen die verwendeten Verknüpfungen Standardverknüpfungen, insbesondere die Verknüpfungen deckungsgleich, parallel, senkrecht, tangential, konzentrisch, mit Abstand beaufschlagt, mit Winkel beaufschlagt und/oder gegenausgerichtet/ausgerichtet. Von Vorteil ist dabei, dass eine CAD-Standardsoftware verwendbar ist, und dass eine Nachbildung der Arbeitsschritte eines technischen Zeichners direkt in einem Rechnersystem ermöglicht ist.

Bei einer vorteilhaften Ausgestaltung werden die im zweiten Schritt ermittelten Regeln für die ausgewählten Objektklassen mit einer Ordnungsrelation im ersten Teilschritt des dritten Schrittes geordnet, wobei die Ordnung die Abfolge der Verknüpfungsbefehle im zweiten Teilschritt des dritten Schrittes bestimmt. Mit einer Ordnungsrelation sind vorteilhaft die oben beschriebenen Mehrdeutigkeiten vermeidbar.

Bei einer vorteilhaften Ausgestaltung wird eine Basis-Objektklasse ermittelt, insbesondere durch Zählen der Regeln für jede ausgewählte Objektklasse, welche eine weitere ausgewählte Objektklasse mit der Objektklasse in Bezug setzen, und Auswahl der Objektklasse mit der größten derartigen Anzahl oder durch Zählen der eingehenden Kanten für jeden Knoten des Graphen, der die Konstruktionsvariante kodiert. Somit ist vorteilhaft ein Ausgangspunkt für die Erstellung der Zusammenbauszeichnung bestimmbar. Es wird vorteilhaft diejenige Objektklasse als Basis-Objektklasse ausgewählt, an welchem die meisten Bauteile hängen, da diese im Allgemeinen das Gehäuse oder ein anderes fundamentales Bauteil repräsentiert. Somit ist der Rechenaufwand beim Erstellen möglichst klein gehalten, da nicht im Laufe des Erstellens bereits eingefügte Bauteile auf ein neues Bauteil rechnerisch bezogen werden müssen.

Bei einer vorteilhaften Ausgestaltung ist jede Regel in der dritten Datenbank mit einem binärwertigen Attribut belegt und es werden die im zweiten Schritt ermittelten Regeln nach dem Wert dieses Attributs geordnet, insbesondere beim Sortieren der Regeln im ersten Teilschritt des dritten Schrittes. Somit ist die Möglichkeit geschaffen, Zwischenschritte bei der Ausrichtung vorzusehen, deren Bearbeitung Vorrang genießt. Es sind vorteilhaft Mehrdeutigkeiten vermeidbar.

Bei einer vorteilhaften Ausgestaltung ist eine Ordnungsrelation auf der Menge der verwendbaren Verknüpfungen erklärt, die zur Ordnung der im zweiten Schritt ermittelten Regeln für die ausgewählten Objektklassen verwendet wird, insbesondere beim Sortieren der Regeln im ersten Teilschritt des dritten Schrittes. Eine Ordnungsrelation auf den verwendbaren Verknüpfungen orientiert sich vorteilhaft auf den funktionalen Eigenschaften der CAD-Standardsoftware, die verwendet wird. Beispielsweise ist es vorteilhaft, wenn die Ordnungsrelation auf der Menge der verwendbaren Verknüpfungen Flächen-Verknüpfungen und/oder Ebenen-Verknüpfungen und/oder Kanten-Verknüpfungen vor Achs-Verknüpfungen und Achs-Verknüpfungen vor Muster-Befehlen einordnet. Da zur Abarbeitung von Muster-Befehlen das zu musternde Bauteil schon ausgerichtet sein sollte, sind diese zuletzt einzuarbeiten.

Bei einer vorteilhaften Ausgestaltung ist eine Ordnungsrelation auf der Menge Objektklassen erklärt, die zur Ordnung der im zweiten Schritt ermittelten Regeln für die ausgewählten Objektklassen verwendet wird, insbesondere beim Sortieren der Regeln im ersten Teilschritt des dritten Schrittes. Somit ist unnötiger Rechenaufwand bei der Erstellung des 3D-Modells vermeidbar. Vorzugsweise wird für jede in der Konstruktionsvariante verwendeten Objektklasse die Anzahl der Regeln, welche eine weitere ausgewählte Objektklasse mit der Objektklasse in Bezug setzen, ermittelt oder es wird für jede in der Konstruktionsvariante verwendeten Objektklasse in dem Graphen, der die Konstruktionsvariante kodiert, die Anzahl der an dem die Objektklasse repräsentierenden Knoten eingehenden Kanten, ermittelt. Vorteilhaft werden im ersten Teilschritt des dritten Schrittes die Objektklassen absteigend nach der für jede in der Konstruktionsvariante verwendeten Objektklasse ermittelten Anzahl geordnet, insbesondere vom Montier-Modul. Somit ist eine Basis-Objektklasse und damit ein Basis-Bauteil einfach und ohne menschlichen Eingriff auswählbar. Mit der Kodierung mittels Graphen ist die Basis-Objektklasse besonders vorteilhaft als Knoten, an dem die meisten gerichteten Wege enden, ableitbar. Diese Auswahl ist vorteilhaft im Montier-Modul integriert.

Bei einer vorteilhaften Ausgestaltung greift ein Darstellungs-Modul im zweiten Teilschritt des dritten Schrittes auf eine CAX-Schnittstelle zu, über welche CAD-Daten, insbesondere Einzelteilzeichnungen oder 3D-Modelle der Bauteile der Konstruktionsvariante, in die CAD-Standardsoftware eingeladen werden. Vorzugsweise greift ein Darstellungs-Modul im zweiten Teilschritt des dritten Schritts auf die CAD-Standardsoftware zu, und legt in dieser eine Baugruppe an, lädt in die Baugruppe die Einzelteilzeichnungen der Bauteile der Konstruktionsvariante ein, selektiert in diesen gemäß der ermittelten Regeln die betreffenden Hilfsfiguren und verknüpft und/oder mustert diese gemäß der ermittelten Regeln, und die CAD-Standardsoftware berechnet ein 3D-Modell der Konstruktionsvariante. Vorzugsweise werden die CAD-Zeichnungen zu den Bauteilen mit einer PLM-Software verwaltet und es wird für die Erstellung der CAD-Zeichnung die jeweils aktuelle CAD-Zeichnungsversion verwendet. Somit ist ein Verfahren bereitgestellt, das kompatibel zu bei CAD-Standardsoftware-Paketen übliche Standardsoftware-Pakete zur Datenverwaltung einsetzbar. Bei der Erstellung des 3D-Modells sind vorteilhaft menschliche Eingriffe und/oder Entscheidungen vermeidbar, der Automatisierungsgrad ist hoch.

Besonders vorteilhaft erfolgt der Zugriff auf die Datenbanken über ein Intranet oder das Internet. Die Software-Module sind somit auf einem lokal vorhandenen Computer installierbar oder über Internet, vorzugsweise Eingabemasken oder Applets, steuerbar. Das 3D-Modell und/oder abgeleitete Zeichnungen sind über Internet übermittelbar.

Bei einer vorteilhaften Ausgestaltung wird von dem 3D-Modell der Konstruktionsvariante eine CAD-Zeichnung abgeleitet, in der die Objektklassen zu den Bauteilen, also die Bauteilverwendungskennzeichen, als Positionsnummern dargestellt sind. Somit ist eine von einem Monteur, einem Konstrukteur und/oder von einem Vertriebsingenieur verwendbare Zeichnung erstellbar.

Bei einer vorteilhaften Ausgestaltung stellen die Konstruktionsvarianten insbesondere Konstruktionsvarianten einer Getriebebaureihe dar, wobei die Bauteile durch die verwendbaren Einzelteile der Getriebevarianten gegeben sind und die Objektklassen Mengen von Bauteilen des Baukastens bezeichnen, die einen gemeinsamen Bezug auf ein weiteres Bauteil des Baukastens aufweisen. Von Vorteil ist dabei, dass die für Getriebebaureihe typische Variantenvielfalt mit dem Verfahren beherrschbar ist.

Bei einer vorteilhaften Ausgestaltung sind einzelne oder alle Datenbanken als SQL-Datenbanken mit Schnittstellen ausgeführt. Somit ist vorteilhaft eine Versionsverwaltung für die Datenbanken vorsehbar. Das Verfahren ist somit für Baureihen mit einer großen Teilevielfalt und/oder einer großen Variantenvielfalt einsetzbar.

Bei einer vorteilhaften Ausgestaltung ist das Darstellungs-Modul von dem Montier-Modul umfasst. Somit ist eine kompakte Umsetzung der Erfindung in Software-Module ermöglicht.

Bei einer vorteilhaften Ausgestaltung werden jedem Bauteil des Baukastens Hilfsfiguren zugeordnet, wobei wenigstens ein Bauteil eine Welle ist und dieser Welle die Symmetrieachse der Welle oder eine konzentrisch zu dieser Symmetrieachse angeordnete Zylinderfläche als Hilfsfigur zugeordnet ist. Die Erfindung ist somit vorteilhaft bei Baureihen von Getrieben einsetzbar. Die Zylinderfläche stellt vorzugsweise eine physikalische Oberfläche oder eine Materialgrenze oder eine Einhüllende einer Verzahnung oder eines Gewindegangs dar.

Bei einer vorteilhaften Ausgestaltung ist wenigstens ein Bauteil ein Verzahnungsteil und es ist diesem Verzahnungsteil wenigstens eine, eine Seitenfläche des Verzahnungsteils umfassende Ebene oder eine hierzu parallel verlaufende Ebene als Hilfsfigur zugeordnet. Die Erfindung ist somit mit Vorteil einsetzbar bei Baureihen, deren Varianten durch ein Anlegen von Bauteilen aneinander erzeugt werden. Insbesondere ist somit eine axiale Festlegung von rotierenden Bauteilen an Auflageflächen oder Anschlagflächen bewirkbar.

Bei einer vorteilhaften Ausgestaltung werden in einem Regelspeicher, insbesondere die zweite Datenbank, Regeln eingegeben, indem für jede Regel wenigstens ein erstes Bauteilverwendungskennzeichen, ein zweites Bauteilverwendungskennzeichen, eine erste Hilfsfigur, eine zweite Hilfsfigur und ein Ausrichtungsbefehl benannt werden, wobei der Ausrichtungsbefehl eine Ausrichtung der ersten Hilfsfigur relativ zu der zweiten Hilfsfigur erzwingt. Durch diese Regeln sind somit elementare Zusammenbau-Arbeitschritte abgebildet, aus denen der automatische Zusammenbauvorgang automatisiert zusammengesetzt wird.

Besonders günstig ist es dabei, wenn aus den Bauteilen des Baukastens Bauteilsorten gebildet sind, wobei den Bauteilen einer jeweiligen Bauteilsorte gleiche Hilfsfiguren zugeordnet sind, und die Bauteilverwendungskennzeichen jeweils einer Bauteilsorte zugeordnet sind und die Verbindung der Bauteilsorte mit einer oder mehreren weiteren Bauteilsorten beschreiben.

Bei einer vorteilhaften Ausgestaltung erzwingt in wenigstens einer Regel der Ausrichtungsbefehl eine koaxiale Ausrichtung. Somit wird die funktionsnotwendige Ausrichtung der Achsen rotierender Bauteile zum Zusammenbau verwendet.

Bei einer vorteilhaften Ausgestaltung erzwingt in wenigstens einer Regel der Ausrichtungsbefehl eine deckungsgleiche oder parallele Ausrichtung von Ebenen. Eine solche Ausrichtung kann beispielsweise ein Auflegen und/oder ein Anlegen und/oder ein Aufreihen und/oder ein Einpassen beschreiben. Vorzugsweise wird ein derartiger Ausrichtungsbefehl auf Hilfsfiguren bezogen, die physikalische Berührflächen zweier Bauteile im zusammengebauten Zustand beschreiben.

Bei einer vorteilhaften Ausgestaltung wird nach Erstellung eines 3D-Modells der Konstruktionsvariante mit einer Kollisionsprüfung eine Reihenfolge der Demontageschritte der zusammengebauten Konstruktionsvariante automatisiert ermittelt. Beispielsweise ist so automatisiert ermittelbar, dass eine Unterlegscheibe vor dem Einschrauben einer Schraube in ein Gehäuse auf die Schraube aufgesteckt wird und nicht nach dem Einschrauben. Durch Verwendung der Kollisionsprüfung ist ein erfindungsgemäß gestaltetes Rechnersystem in der Lage, ohne menschlichen Eingriff die einzelnen Ausrichtungsbefehle nacheinander, also sukzessive und iterativ, aufzuheben und jeweils zu prüfen, ob der nun nicht mehr festgelegte Freiheitsgrad ein kollisionsfreies Entfernen eines Bauteils erlaubt. Ist dies der Fall, wird vorzugsweise mit einem weiteren, dieses Bauteil betreffenden Ausrichtungsbefehl fortgefahren, ist dies nicht der Fall, wird ein anderer Ausrichtungsbefehl gewählt. Ist ein Bauteil mit allen Freiheitsgraden unabhängig von den übrigen Bauteilen, so wird dieses Bauteil vorzugsweise auf der Liste der Demontageschritte gespeichert. Besonders günstig ist es, wenn mit zunächst mit der Aufhebung der Ausrichtungsbefehle oder Verknüpfungen von Ebenen begonnen wird, weil diese häufig die axiale Festlegung auf Achsen beschreiben, und die betreffenden Bauteile entlang dieser Achsen zur Demontage auseinander heraus ziehbar sind.

Bei einer vorteilhaften Ausgestaltung wird nach Erstellung eines 3D-Modells der Konstruktionsvariante an ein Steuerungsgerät einer Anlage, die wenigstens ein Handhabungsgerät umfasst, eine ermittelte Reihenfolge von Demontageschritten übergeben und es steuert das Steuerungsgerät die Anlage und arbeitet die ermittelte Reihenfolge der Demontageschritte in umgekehrter Reihenfolge ab, und die Anlage montiert somit die Konstruktionsvariante. Somit ist im Fertigungsprozess der Konstruktionsvariante nicht nur das erforderliche 3D-Modell, sondern sogar die physikalische Realisierung der Konstruktionsvariante herstellbar.

Bei einer vorteilhaften Ausgestaltung wird nach Erstellung eines 3D-Modells der Konstruktionsvariante eine Kollisionsprüfung durchgeführt und es wird eine Fehlermeldung ausgegeben, wenn die Kollisionsprüfung einen Fehler ergibt. Ein solcher Fehler ergibt sich beispielsweise, wenn sich Bauteile im zusammengebauten Zustand funktionshindernd überlappen. Somit sind Konstruktionsfehler, die sich beispielsweise durch ein fehlerhaft gewartetes Regelwerk eines Konfigurators ergeben, bereits vor dem Zusammenbau leicht erkennbar. Im Fall eines Fehlers kann nun ein Konstrukteur das hergestellte 3D-Modell entsprechend abändern und/oder eine Korrektur des Konfigurationsregelwerks durchführen.

Bei einer vorteilhaften Ausgestaltung wird nach Erstellung eines 3D-Modells der Konstruktionsvariante eine Funktionssimulation durchgeführt oder dargestellt. Somit ist der Anwender in der Lage, zu prüfen, ob die gewählte Konfigurationsvariante die beabsichtigten Anforderungen erfüllt. Konfigurationsfehler sind erkennbar und vermeidbar. Eine solche Funktionssimulation ist vorteilhaft mit einer Simulation der beabsichtigten Belastung, insbesondere mit einer Simulation der Materialermüdung, kombinierbar.

Wichtige Merkmale der Erfindung eines Verfahrens zur Herstellung eines Erzeugnisses mit mehreren baulichen Konstruktionsvarianten sind, dass in einem ersten Schritt eine gewählte Konstruktionsvariante mit einer Stückliste definiert und/oder konfiguriert wird, in einem zweiten Schritt in einer Datenbank abgelegte Regeln zur Verknüpfung der Posten der Stückliste ausgewertet werden, und in einem dritten Schritt aus den ausgewerteten Regeln Montageanweisungen und/oder Fertigungsanweisungen und/oder CAD-Zeichnungen abgeleitet werden. Von Vorteil ist dabei, dass die Fertigung automatisierbar ist, und insbesondere aus der Ferne auslösbar ist. Besonders vorteilhaft ist, dass mit den Zeichnungen, die ihrerseits vorzugsweise Positionsnummern aufweisen, eine Montageanleitung generierbar ist, die aus der ermittelten Reihenfolge der ermittelten Regeln abgeleitet ist.

Wichtige Merkmale der Erfindung einer Verwendung eines Verfahrens zur Herstellung eines Erzeugnisses mit mehreren baulichen Konstruktionsvarianten sind, dass das Verfahren zur Projektierung und/oder Feilbietung von Konstruktionsvarianten einer Baureihe, insbesondere von Getrieben einer Getriebe-Baureihe eingesetzt wird. Von Vorteil ist dabei, dass ein Baukasten mit großer Teilevielfalt und/oder großer Variantenvielfalt verwaltbar ist, wobei die Prozesse zur Erzeugung von 3D-Modellen und/oder anderen Darstellungen automatisierbar sind. Somit sind menschliche Fehler im Erstellungsprozess vermeidbar, und die Erstellzeit ist verkürzbar.

Weitere Vorteile ergeben sich aus den Unteransprüchen.

Die Erfindung wird nun anhand von Abbildungen näher erläutert. Innerhalb einer der Getriebe-Baureihe sind Getriebe in einer Anzahl von baulichen Konstruktionsvarianten fertigbar, die jeweils aus Bauteilen eines gemeinsamen Baukastens zusammengesetzt sind und die zusammen die Getriebe-Baureihe bilden.

Es zeigt
- Figur 1 eine Prinzipskizze einer erfindungsgemäßen Vorrichtung,
- Figur 2a ein Beispiel einer Stückliste für eine Konstruktionsvariante,
- Figur 2b eine alternative Darstellungsform der Stückliste aus Figur 2a,
- Figur 3 ein Beispiel eines Bauteilverwendungskennzeichenkatalogs,
- Figur 4a den ersten Teil eines Auszugs aus einer Wissensbasis-Datenbank,
- Figur 4b den zweiten Teil des Auszugs aus Figur 4a,
- Figur 5 eine erstellte Variantenzeichnung mit Bauteilverwendungskennzeichen zu der Stückliste aus Fig. 2a/b und zu der Wissensbasis-Datenbank aus Fig. 4a/b,
- Figur 6a die ermittelten Verknüpfungen für die Konstruktionsvariante aus Fig. 2a/b,
- Figur 6b die ermittelten Muster-Befehle für die Konstruktionsvariante aus Fig. 2a/b,
- Figur 7 die CAD-Ansicht des Bauteils 040 von der Stucklisteder Konstruktionsvariante aus Fig. 2a/b,
- Figur 8 die Positionen der Wellenstümpfe im Gehäuse eines Getriebes,
- Figur 9 ein weiteres Beispiel eines Auszugs aus einer Wissensbasis-Datenbank,
- Figur 10 einen Algorithmus für ein Montier-Modul,
- Figur 11 eine vorläufige Strukturliste,
- Figur 12 eine befüllte Strukturliste,
- Figur 13 eine sortierte Strukturliste,
- Figur 14 einen Algorithmus für ein Darstellungs-Modul,
- Figur 15 eine Anlage zur Herstellung eines Getriebes.

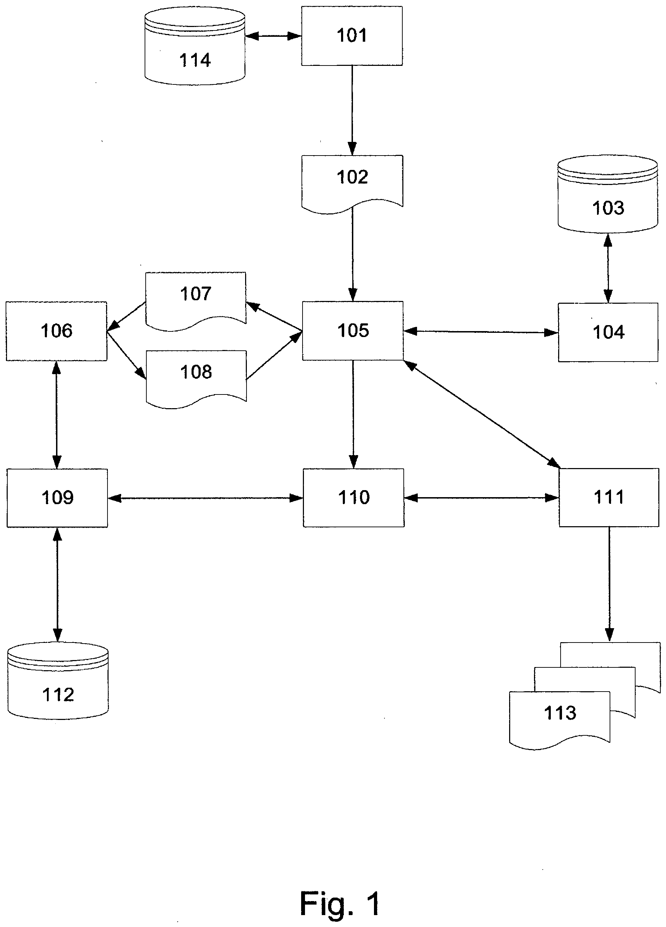

Figur 1 zeigt in Form einer Prinzipskizze sowohl die Komponenten eines 3D-Konfigurators, also einer Vorrichtung zur Erzeugung einer Konstruktionszeichnung für Konstruktionsvarianten einer Baureihe, als auch den Informations- und Datenfluss zwischen diesen Komponenten sowie die Endprodukte.

Auf einem nicht dargestellten Rechnersystem ist ein Konfigurator 101 installiert. Dieser Konfigurator 101 ist ein als Mensch-Maschine-Schnittstelle ausgebildetes Konfigurationswerkzeug, ein SAP/R3-Konfigurator, mit dem für jede gewünschte Konstruktionsvariante der Getriebe-Baureihe eine Auftrags-Stückliste 102 erstellbar ist. Zur Erstellung der Auftrags-Stückliste 102 greift der Konfigurator 101 auf eine Konfigurations-Datenbank 114 zu, auf der Informationen über die Bauteile des Getriebe-Baukastens und Informationen über die mögliche Verwendung der Bauteile innerhalb der Baureihe zur Bildung der Konstruktionsvarianten gespeichert ist.

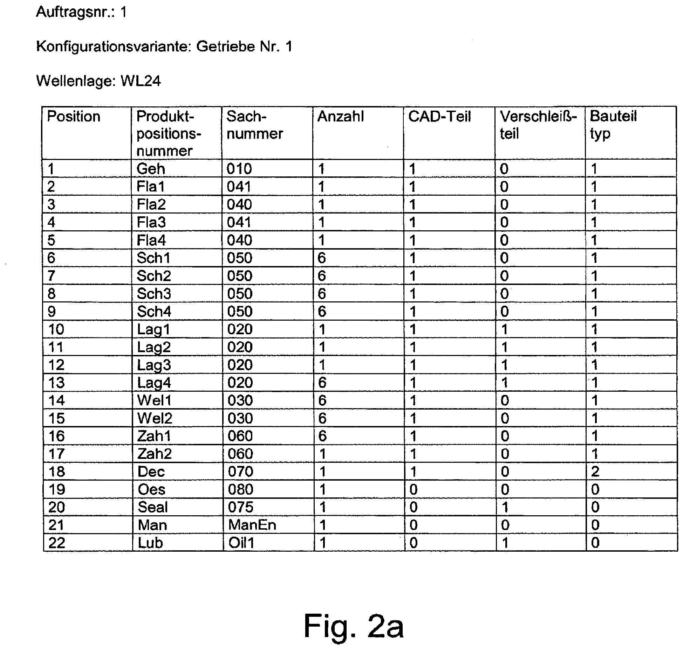

Eine derartige Auftrags-Stückliste 102 ist beispielhaft in Figur 2a dargestellt und wird im Folgenden beschrieben.

Im Kopf der Auftrags-Stückliste 102 sind allgemeine Informationen zu der Konstruktionsvariante abgelegt. Diese umfassen im hier beschriebenen Beispiel eine Nummer zur Kennzeichnung des Auftrags, ein beschreibendes Stichwort zu der Konstruktionsvariante und eine Information zur Lage der Wellen.

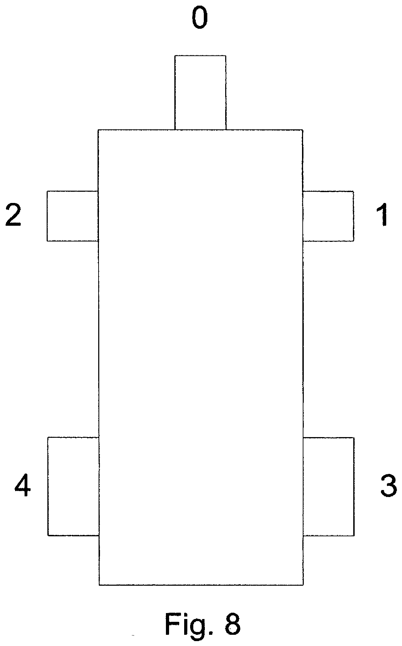

Diese Wellenlage ist dabei mittels mehrerer Ziffern kodiert, die die Positionen bezeichnen, an denen Wellenstümpfe vorgesehen sind. Die möglichen Positionen zeigt Figur 8. Aus der Figur 8 ist durch die unterschiedlichen Wellendurchmesser angedeutet, dass die Positionen 0, 1 und 2 zu eintreibenden Wellen gehören, während die Positionen 3 und 4 abtreibenden Wellen zugeordnet sind. Die Position 0 ist für die eintreibende Welle eines Kegelradsatzes eines Winkelgetriebes vorgesehen.

Die in Figur 2a dargestellte Auftrags-Stückliste beschreibt somit ein Getriebe, dessen eintreibende Welle an der Position 2 vorgesehen ist, während die abtreibende Welle an der Position 4 vorgesehen ist.

An den Kopf der Auftrags-Stückliste 102 aus Figur 2a schließt sich die eigentliche Stückliste in Form einer Tabelle an. Jede Zeile der Tabelle beschreibt ein Bauteil oder ein Teil, das zur Konstruktionsvariante gehört.

Die Tabelle ist aus sieben Spalten aufgebaut:
Die erste Spalte enthält jeweils eine Zeilennummer zur Identifikation jedes Eintrags. Diese kann auch entfallen und wird hier zur Beschreibung der Erfindung herangezogen.

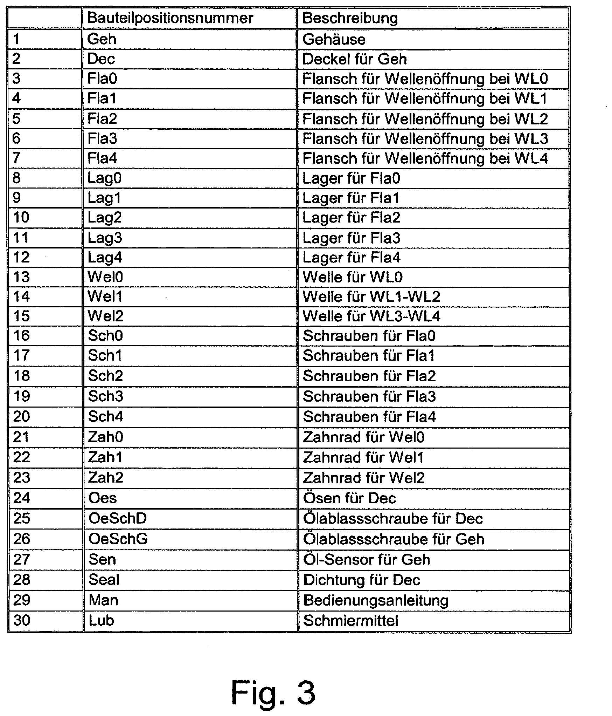

Die zweite Spalte enthält eine Information über die Verwendung des Bauteils in Form eines Bauteilverwendungskennzeichens. Die Tabelle aus Fig. 3 liefert zu jedem verwendbaren Bauteilverwendungskennzeichen eine Beschreibung, die die Verwendung des betreffenden Bauteils festlegt. Die Tabelle aus Fig. 3 definiert somit einen Bauteilverwendungskennzeichenkatalog, der in der Konfigurations-Datenbank 114 abgelegt ist und dort gepflegt wird, da der Konfigurator 101 auf diesem Katalog basiert. Der Bauteilverwendungskennzeichenkatalog enthält somit auch Bauteilverwendungskennzeichen, die nicht in der aktuellen Konstruktionsvariante auftreten. Beispielsweise sind bei einem Stirnradgetriebe eintreibende und abtreibende Welle in der Regel parallel, weshalb etwa "Fla0", "Lag0" und "Sch0" nicht verwendet werden, während bei einer Kegelradstufe die eintreibende Welle an der Position "0" aus Figur 8 angeordnet ist, weshalb die genannten Bauteilverwendungskennzeichen für diese Variante mit Sachnummern belegt werden müssen. Eine Tabelle aller Bauteilverwendungskennzeichen ist in der Konfigurations-Datenbank 114 abgelegt und wird zur Erstellung der Auftrags-Stückliste 102 vom Konfigurator 101 verwendet.

Somit ist beispielweise aus Zeile 8 der Auftrags-Stückliste nach Fig. 2a und dem weiter unten erläuterten Bauteilverwendungskennzeichenkatalog nach Fig. 3, insbesondere Zeile 19 dort, ersichtlich, dass sechs Bauteile mit der Sachnummer "050" als Schrauben am Flansch für die Wellenöffnung bei Wellenlage "3" vorgesehen sind.

Beispiele für ein Bauteilverwendungskennzeichen können je nach Zusammensetzung des Baukastens ein Verschluss für eine Öffnung in einer Gehäusewand, eine Schraube für diesen Verschluss, eine Dichtung für diesen Verschluss, ein Dichtungssystem für eine bestimmte Wellenlage, ein Gehäuse oder die in der Tabelle aus Fig. 3 genannten Beispiele sein. Diese Aufzählung ist nicht erschöpfend.

Die dritte Spalte der Tabelle aus Fig. 2a enthält die Sachnummer des Bauteils. Durch diese Sachnummer ist das konkrete Bauteil, das in der Konstruktionsvariante gemäß dem angegebenen Bauteilverwendungskennzeichen verbaut werden soll, eindeutig identifizierbar.

Beispiele für durch Sachnummern bezeichnete, konkrete Bauteile können je nach Zusammensetzung des Baukastens ein Zahnrad mit einer bestimmten Zähnezahl und bestimmten Abmessungen, eine Welle mit einer bestimmten Länge, einem bestimmten Durchmesser und einer bestimmten Materialausführung, eine Zylinderkopfschraube mit bestimmten Maßen, eine Sechskantkopfschraube mit bestimmten Maßen, ein Gehäusedeckel in einer bestimmten Ausprägung sein. Diese Aufzählung ist nicht erschöpfend.

Die vierte Spalte der Tabelle aus Fig. 2a enthält die Anzahl, wie oft das Bauteil in der Konstruktionsvariante vorkommt. Hierbei werden nur solche Bauteile zusammengefasst, für die die Verwendung, also das Bauteilverwendungskennzeichen, gleich ist. In der Konstruktionsvariante des dargestellten Beispiels wird die Schraube mit der Sachnummer "050" 24mal verbaut, und zwar je sechsmal an den Flanschen "Fla1" bis "Fla4", die ihrerseits durch die Bauteile "040" beziehungsweise "041" besetzt sind.

Die fünfte Spalte der Tabelle aus Fig. 2a gibt an, ob es sich bei dem Eintrag um ein CAD-Teil handelt (ja="1", nein="0"). Beispielsweise sind das Handbuch "ManEn" und der Schmierstoff "Oil1" keine Bauteile, die in einer CAD-Darstellung der Konstruktionsvariante enthalten sind. Daher haben die betreffenden Einträge eine "0" in der fünften Spalte.

Die sechste Spalte der Tabelle aus Fig. 2a gibt an, ob es sich bei dem Bauteil um ein Verschleißteil handelt (ja="1", nein="0"). Mit dieser Information sind in einer CAD-Zeichnung die Verschleißteile der Konstruktionsvariante hervorhebbar.

Die siebte Spalte der Tabelle aus Fig. 2a gibt an, um welchen Bauteiltyp es sich handelt. Vorgesehen sind die Werte "1" für ein Einzelteil, "2" für eine Baugruppe, also eine Gruppe von Einzelteilen, und "0" für sonstige Teile. In der Konstruktionsvariante des dargestellten Beispiels wird der Deckel "070" als Baugruppe gekennzeichnet, da er mit den Halteösen "080" und der Dichtung "075" eine Einheit bildet. Somit sind die Ösen "080" auch nicht als CAD-Teil gekennzeichnet, denn sie sind bereits in der CAD-Darstellung des Deckels enthalten. In einem weiteren Ausführungsbeispiel entfällt diese Spalte.

In jeder erstellbaren Auftrags-Stückliste 102 tritt jedes Bauteilverwendungskennzeichen höchstens einmal auf. Je nach Baukasten treten in manchen Varianten manche Bauteilverwendungskennzeichen nicht auf. Je nach Struktur des Baukastens sind verschiedene Varianten bildbar, wobei ein und dasselbe Bauteilverwendungskennzeichen in den jeweiligen Stücklisten 102 der Varianten unterschiedlichen Sachnummern beigeordnet ist.

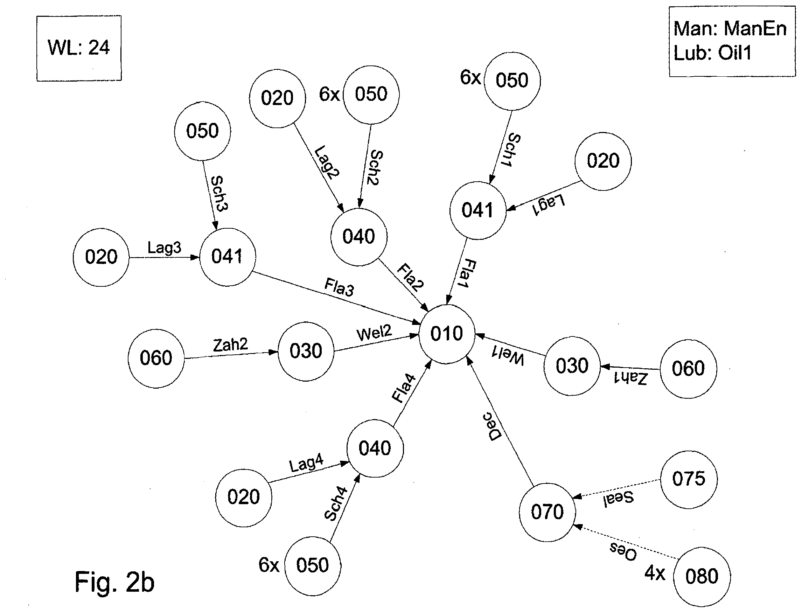

Eine Auftrags-Stückliste 102 enthält also neben Informationen über die CAD-Darstellungsweise Informationen, wie die einzelnen Bauteile der Konstruktionsvariante zusammenhängen. Diese Information ist alternativ mittels eines Graphen wie in Fig. 2b darstellbar. Dabei repräsentieren die Knoten des Graphen die konkreten Bauteile der Variante, gekennzeichnet durch die betreffende Sachnummer, und die Kanten das Bauteilverwendungskennzeichen. Die Richtung der Kanten ergibt sich aus dem jeweiligen Eintrag in der Beschreibung in der Tabelle aus Fig. 3, insbesondere in Zusammenhang mit dem Wort "für" dort. Neben den Knoten ist jeweils die Anzahl aus der Tabelle in Fig. 2a angegeben, wenn diese größer eins ist. Die Bauteilverwendungskennzeichen "Seal" und "Oes" werden durch gestrichelte Kanten repräsentiert, da die Bauteile "075", "080" und "070" in der Auftrag-Stückliste nach Figur 2a als eine Baugruppe geführt werden. Die genannten Bauteile sind somit als eine Baugruppe fertig konstruiert abgelegt.

In der Darstellung nach Figur 2b sind zusätzliche Informationen über die Anordnung der Wellenstümpfe (durch Bezeichnung der Wellenlage) und über der Konstruktionsvariante beigefügte Teile wie Schmieröl oder Bedienungshandbücher aufgeführt. Insbesondere Schmieröl und Bedienungshandbücher sind nicht für eine CAD-Darstellung vorgesehen.

Die Darstellung nach Figur 2b ist vollständig aus den Informationen in den Spalten 1 bis 3 der Auftrags-Stückliste 102 in Verbindung mit der Liste aller Bauteilverwendungskennzeichen gemäß der Tabelle in Figur 3 ableitbar, wobei die Bauteilverwendungskennzeichen in dieser Tabelle in der Spalte "Bauteilpositionsnummer" abgelegt sind. Diese Darstellungsmöglichkeit verdeutlicht, dass die Auftrags-Stückliste 102 mehr Information enthält als die bloße Angabe der Einzelteile, aus denen die Konstruktionsvariante zusammengesetzt ist. Da die Bauteilverwendungskennzeichen in der Auftrags-Stückliste 102 zur alphanumerischen Ordnung der einzelnen Positionen verwendbar sind, ist für die Bauteilverwendungskennzeichen auch die Bezeichnung "Laufnummer" gebräuchlich. Im Gegensatz zu den sonst üblichen Laufnummern einer Auftrags-Stückliste ist jedoch in einer Auftrags-Stückliste wie der Auftrags-Stückliste 102 keine fortlaufende Reihe von Laufnummern verwendet, die bei "1" beginnt und keine Lücken aufweist, sondern es sind eben genau die zur Bildung der konkreten Variante erforderlichen Bauteilverwendungskennzeichen gemeinsam mit den jeweils konkret zu verwendenden Bauteilen aufgeführt. Die sonst nur zu Ordnungs- oder Verweiszwecken durchlaufende Laufnummer erhält somit eine zusätzliche Funktion, nämlich die Angabe der Verwendung des betreffenden Bauteils an der durch die Auftrags-Stückliste 102 definierten Variante.

Der in Figur 2b dargestellte Graph enthält keine Kreise oder Zyklen. Von jedem Knoten geht höchstens eine gerichtete Kante ab. Dies entspricht der Angabe einer einzigen Verwendung für jedes Bauteilverwendungskennzeichen. Die gerichteten Kanten des Graphen definieren gerichtete Wege, die ausnahmslos am Knoten "010" enden. Die Länge eines Wegs, also die Zahl der Kanten, aus den ein Weg zusammengesetzt ist, ist im Allgemeinen von Weg zu Weg unterschiedlich: Es gibt Wege, deren Länge größer eins ist, der Durchmesser des Graphen ist also größer als eins. Somit ist deutlich, dass die Information in Tabelle nach Fig. 2a verschieden ist von der Verwendung eines Masters, bei dem alle Bauteile in Bezug auf einen Grundkörper angegeben wären und bei dem somit alle Wege im zugeordneten Graphen die Länge eins aufwiesen. Durch die Verwendung von Graphen mit Durchmesser größer eins sind die Bauteile vorteilhaft zu Baugruppen gruppierbar, beispielsweise für eine CAD-Darstellung der Baugruppe oder für die Fertigung.

Die Auftrags-Stückliste 102 wird, wie in Figur 1 gezeigt, in ein Montier-Modul 105 eingegeben. Die Auftrags-Stückliste 102 kann dabei in Form eines Papierausdrucks, einer Datei auf einem Speichermedium oder auf einem beliebigen Informationsträger gespeichert gegeben sein. Die Eingabe erfolgt dem jeweiligen Informationsträger entsprechend.

Das Montier-Modul 105 ist als Software-Algorithmus auf einem nicht dargestellten Rechnersystem installiert. Es greift über eine SQL-Schnittstelle 104 auf die Wissensbasis-Datenbank 103 zu, in der in Form von Regeln Paaren von Bauteilverwendungskennzeichen CAD-Verknüpfungsbefehle und/oder CAD-Muster-Befehle zugeordnet sind. Über die SQL-Schnittstelle 104 ermittelt das Montier-Modul 105 automatisch diejenigen Einträge, also Regeln, in der Wissensbasis-Datenbank 103, die für die Auftrags-Stückliste 102 relevant sind. Das Montier-Modul 105 wertet die ermittelten Regeln automatisch aus und erstellt mit diesen über ein CAD-Programm 111, insbesondere eine CAD-Standardsoftware, CAD-Zeichnungen 113, die die Konstruktionsvariante in montierter Form zeigen. Für diese Darstellung greift das Montier-Modul 105 auf eine CAX-Schnittstelle 110 zu, die über eine Lifecycle-Management-Software 109 CAD-Darstellungen und/oder CAD-Daten aus einer Metadatenbank 112 lädt und diese an das CAD-Programm 111 weitergibt. Das Montier-Modul 105 greift über eine PLM-Schnittstelle 106 ebenfalls auf die Lifecycle-Management-Software 109 zu und gibt somit Suchmusterdaten 107 an die Metadatenbank 112 oder empfängt Suchergebnisdaten 108 von dieser. Die Suchergebnisdaten 108 sowie die Suchmusterdaten 107 können dabei auf einem beliebigen Speichermedium und/oder Informationsträger abgelegt sein, wobei sich die in Figur 1 dargestellte Informationsübertragung dem Trägermedium entsprechend vollzieht.

Die Vorrichtung nach Figur 1 umfasst also zumindest drei Datenbanken. Eine erste Datenbank in Form der Metadatenbank 112, auf der zumindest die für eine CAD-Darstellung der einzelnen Bauteile des Baukastens erforderlichen CAD-Daten gespeichert sind, eine zweite Datenbank in Form der Konfigurations-Datenbank 114, die zumindest eine Liste aller in der Baureihe überhaupt verwendbaren Bauteilverwendungskennzeichen enthält, und eine dritte Datenbank in Form einer Wissensbasis-Datenbank 103, in der Regeln abgelegt sind, wobei jede Regel jeweils zwei Bauteilverwendungskennzeichen in Bezug setzt.

Zumindest die Wissensbasis-Datenbank 103 wird vollständig eingegeben, bevor eine Auftrags-Stückliste 102 für eine gewünschte Konfigurationsvariante erstellt wird.

Prinzipiell sind diese Datenbanken in einer einzigen Datenbank vereinigbar. Aus praktischen Erwägungen wird für die Verwaltung der Datenbanken jeweils eine andere StandardSoftware eingesetzt, so dass die Datenbanken physikalisch, je nach Datenbank-Größe sogar räumlich getrennt, sind. Die Datenübertragung zu und von den Datenbanken erfolgt in diesem Fall vorteilhaft über das Internet oder über ein Intranet.

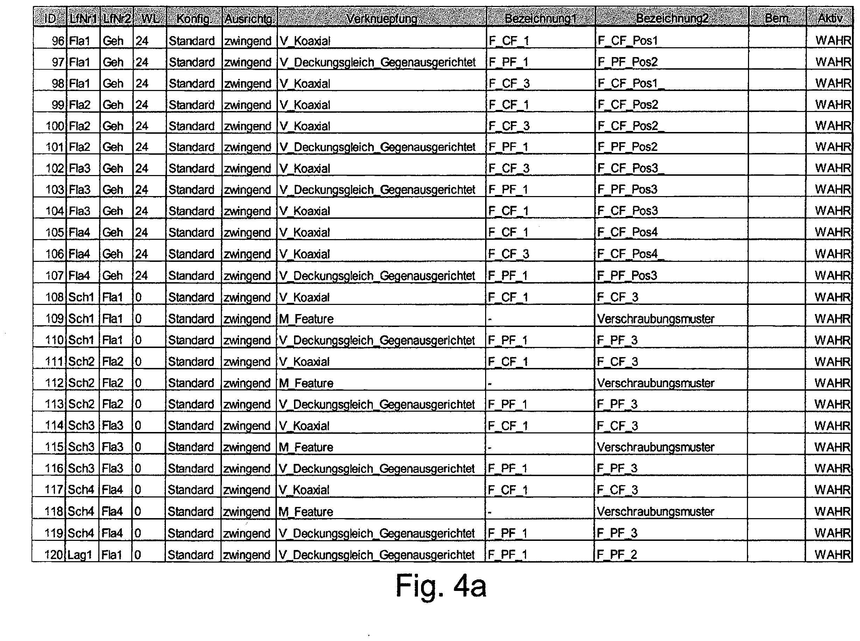

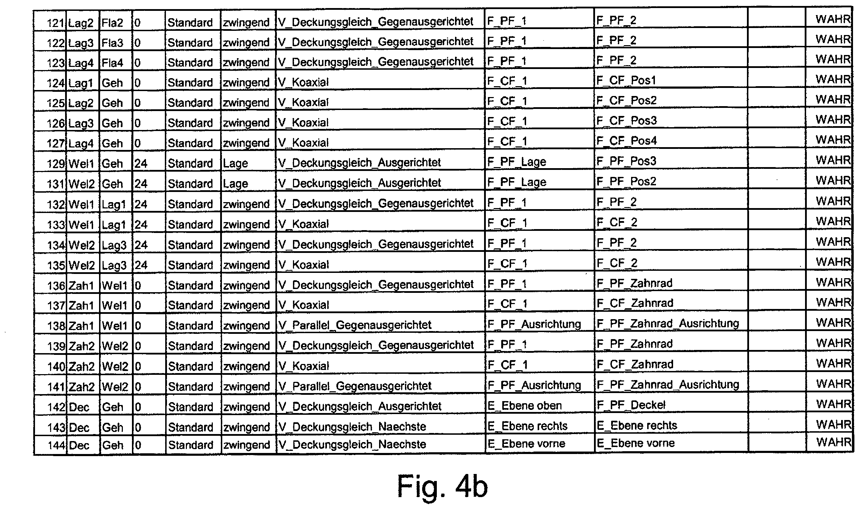

Figur 4a/b zeigt einen Auszug aus einem Beispiel einer Wissensbasis-Datenbank. Jede Zeile der Tabelle definiert eine Regel. Die Reihenfolge der Regeln ist zunächst beliebig und ergibt sich vorzugsweise aus dem Erfordernis, die Wissensbasis-Datenbank strukturiert pflegen zu können.

Jede Regel setzt genau zwei Bauteilverwendungskennzeichen, in der Tabelle unter der Bezeichnung Laufnummer, abgekürzt LfNr1 und LfNr2, zueinander in Bezug. Jede Regel beschreibt die Festlegung genau eines Bewegungs-Freiheitsgrades, den die betreffenden Bauteile, die den Bauteilverwendungskennzeichen jeweils zugewiesen werden können, relativ zueinander haben. Bei an sich rotationssymmetrischen Teilen, beispielsweise Wellen, erfolgt die Festlegung des mit der Symmetrie verbundenen Freiheitsgrad vorzugsweise durch eine Symmetriebrechung, beispielsweise durch die Zusatzforderung, dass die Passfedern der Wellen standardmäßig nach oben zu richten seinen. Die Festlegungen erfolgen mittels der in den Spalten "Verknuepfung", "Bezeichnung1" und "Bezeichnung2" eingetragenen Daten. Regeln der Wissensbasis-Datenbank 103, die sich auf Bauteilverwendungskennzeichen beziehen, die nicht in der Auftrags-Stückliste 102 aus Fig. 2a aufgeführt sind, wurden in Figur 4a/b unterdrückt, um die Übersichtlichkeit zu wahren.

Im Fall einer Verknüpfungs-Regel nennt "Bezeichnung1" dabei die Bezeichnung einer geometrische Hilfsfigur, die in der CAD-Zeichnung eines jeden Bauteils des Baukastens, das des unter "LfNr1" aufgeführten Bauteilverwendungskennzeichen zuordenbar ist, definiert ist, und "Bezeichnung2" in analoger Weise die Bezeichnung einer geometrische Hilfsfigur für das unter "LfNr2" aufgeführte Bauteilverwendungskennzeichen. Als Hilfsfiguren sind Ebene, Flächen, auch gekrümmte, insbesondere physisch gegebene wie Oberflächen oder Begrenzungsflächen, Kanten, auch nicht-geradlinig verlaufende, insbesondere physische, Achsen oder Punkte sowie regelmäßige Anordnungen, Muster, vorsehbar.

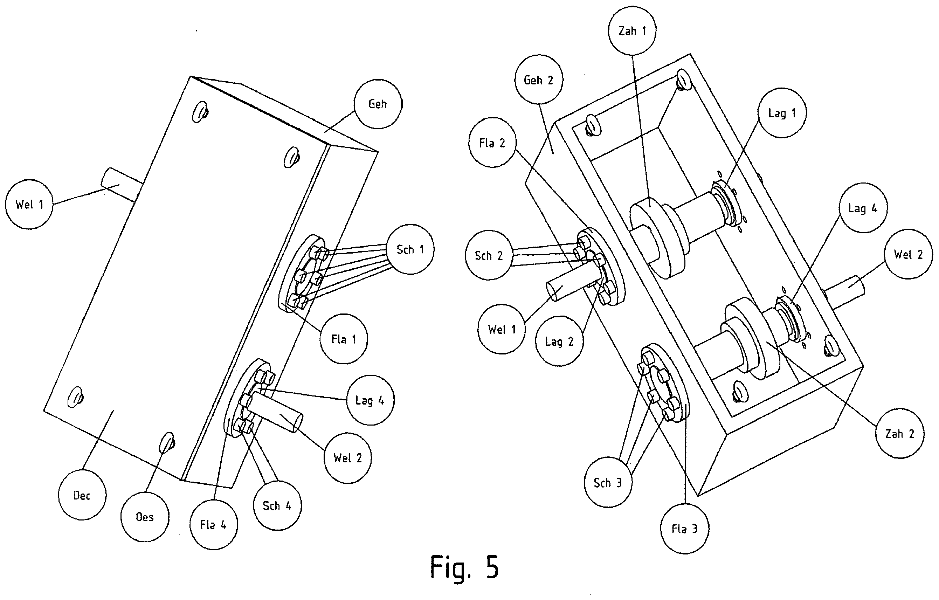

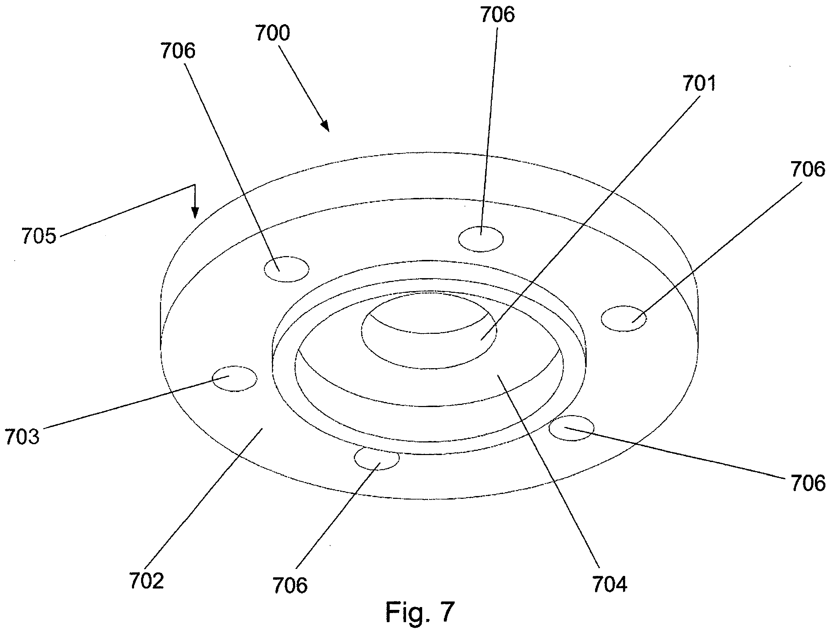

Beispielsweise zeigt Figur 7 das Bauteil "040", einen Flansch, als 3D-Modell 700. In diesem sind insbesondere die folgenden Hilfsfiguren mit Namen versehen: die zylindrische Oberfläche 701 mit der Bezeichnung "F_CF_1", die zylindrische Oberfläche 703 mit "F_CF_3", die ringförmige Oberfläche 702 mit "F_PF_1", die dieser Oberfläche auf der Rückseite des 3D-Modells 700 gegenüberliegende Oberfläche 705 mit "F_PF_3" und die ringförmige Oberfläche 704 mit "F_PF_2". Außerdem ist ein Muster "Verschraubungsmuster" definiert, bei dem als Referenzpunkt das zur Oberfläche 703 gehörige Schraubenloch und als Skizzenpunkte die übrigen Schraubenlöcher 706 verwendet werden. Da die Bauteilverwendungskennzeichen "Fla1", "Fla2", "Fla3" und "Fla4" im Beispiel prinzipiell für austauschbare Teile stehen, vergleiche Figur 5, sind die ausgezeichneten Hilfsfiguren mit Namen gleich.

Die Kennzeichnung von Hilfsfiguren in den 3D-Modellen der einzelnen Bauteile orientiert sich allgemein daran, wie die einzelnen Bauteile im montierten Zustand miteinander verbunden sind. Jede der Hilfsfiguren dient zur Festlegung eines physikalischen Bewegungsfreiheitsgrads.

Bei diskret oder kontinuierlich rotationssymmetrischen Bauteilen ist zunächst die Symmetrieachse oder eine zu dieser konzentrisch angeordnete Zylindermantelfläche gekennzeichnet. Derartige rotationssymmetrische Bauteile sind beispielsweise Wellen, Schrauben, Lager, Dichtungen, Distanzhülsen, Verzahnungsteile oder rotationssymmetrische Gehäuseteile. Beispielsweise kann diese Hilfsfigur bei einer Welle die Oberfläche eines axialen Abschnitts der Welle, der einen konstanten Durchmesser aufweist, sein, im Fall einer Schraube die Einhüllende des Gewindebereichs, im Fall eines Lagers die Innenfläche des inneren Lagerrings, die Außenfläche des äußeren Lagerrings oder eine die Mitte der Wälzelemente beschreibende Zylindermantelfläche, im Fall einer Dichtung oder Distanzhülse die Innenfläche oder die Außenfläche, bezogen auf eine Radialrichtung, im Fall eines Verzahnungsteil die Innenfläche der Mittenbohrung oder eine Zylindermantelfläche, die den Kopfkreis, den Fußkreis oder den Teilkreis des Verzahnungsteils beschreibt, und im Fall eines rotationssymmetrischen Gehäuseteils die radial innenliegende Aufnahmefläche für einen Lagerring. Es wird daher bei dieser Auszeichnung von symmetriebrechenden, geometrischen Besonderheiten, beispielsweise dem Gewindegang einer Schraube oder den Passfedernuten einer Welle oder der Verzahnung eines Verzahnungsteils, abgesehen.

Die Regeln, die diese Hilfsfiguren mit weiteren Hilfsfiguren verknüpfen sollen zur Erzwingung einer partiellen Ausrichtung, enthalten Ausrichtungsbefehle, die sich auf eine ebenfalls rotationssymmetrische Hilfsfigur beziehen, in welche das zugehörige Bauteil aufgenommen wird oder welche das zugehörige Bauteil aufnimmt. Beispiele derartiger Paarungen umfassen
- die Außenfläche eines Wellenabschnitts mit der Innenfläche eines Verzahnungsteils, einer Distanzhülse oder eines Lagerrings, wobei diese Innenfläche Teil der Berührfläche zwischen Welle und Verzahnungsteil, Distanzhülse oder Lagerring ist,
- die Einhüllende des Gewindegangs einer Schraube mit der Innenfläche einer Bohrung, in die die Schraube eingeschraubt wird, wobei von den Einzelheiten der Gewindegänge der Schraubverbindung abgesehen wird,
- die radiale Außenfläche eines umlaufenden Vorsprung an einem Gehäusedeckel mit der Innenfläche einer Öffnung in einem weiteren Gehäuseteil, wobei der Vorsprung des Gehäusedeckels in die Öffnung eingesetzt wird,
- die Außenfläche eines äußeren Lagerrings mit der radialen Innenfläche der Bohrung eines Gehäuseteils, wobei der Lagerring in die Bohrung eingesetzt wird.

Diese Paarungen beziehen sich somit auf die rotationssymmetrischen Flächen, die sich im zusammengebauten Getriebe berühren oder welche, beispielsweise im Fall eines Gewindegangs oder einer Passfeder, diese Berührflächen in rotationssymmetrischer Näherung wiedergeben.

Zur Ausrichtung des rotationssymmetrischen Bauteils in Bezug auf ein weiteres Bauteil ist die Kennzeichnung wenigstens einer weiteren Hilfsfigur notwenig. Hierzu wird eine Ebene gewählt, die senkrecht zu der Symmetrieachse angeordnet ist, und die die axiale Relativposition beschreibt. Diese Ebene beschreibt, bis zu welcher axialen Position die betreffenden Bauteile aufeinander geschoben werden. Für die Auswahl einer Ebene orientiert man sich an den tatsächlich im zusammengebauten Getriebe auftretenden Anschlägen und Berührflächen. Beispielsweise kann dies im Fall einer Welle die axiale Seitenfläche einer Schulter sein, an der ein Lagerinnenring oder eine Distanzhülse anliegt, im Fall einer Schraube die Auflagefläche des Schraubenkopfes, im Fall eines Lagers die axiale Seitenfläche eines Lagerrings, mit dem das Lager an einer Wellenschulter, einem Distanzring oder in einer Gehäusebohrung axial festgelegt ist, im Fall einer Dichtung eine Seitenfläche, mit der die Dichtung in einer Nut axial festgelegt ist, im Fall einer Distanzhülse eine Seitenfläche, mit der die Distanzhülse an einem Verzahnungsteil oder an einem Lagerring oder an einer Wellenschulter oder an einem Federring axial festgelegt ist, im Fall eines Verzahnungsteils die Seitenfläche einer Zahnradnabe oder ein eine Radbohrung begrenzender Radialbereich einer Seitenfläche, mit der oder dem das Verzahnungsteil durch Berührung mit einer Distanzhülse, einer Wellenschulter, einem Federring, einem Sicherungsring oder einem Lagerring axial festgelegt ist, oder im Fall eines rotationssymmetrischen Gehäuseteils die Auflagefläche des Gehäuseteils auf einem weiteren Gehäuseteil oder die axial orientierte, innere Seitenfläche, also der Boden, einer Bohrung für eine Lageraufnahme.

Die Regeln, die diese Hilfsfiguren mit weiteren Hilfsfiguren verknüpfen sollen zur Erzwingung einer partiellen Ausrichtung, enthalten Ausrichtungsbefehle, die sich auf eine weitere Hilfsebene beziehen, wobei sich die beiden Hilfsebenen im zusammengebauten Getriebe berühren oder die beiden Hilfsebenen im zusammengebauten Getriebe einen festen Abstand zueinander einnehmen, der beispielsweise durch ein zusätzlich eingefügtes Bauteil vorgegeben ist.

Soll für die vollständige Festlegung der verbleibende dritte Freiheitsgrad auch noch festgelegt werden, um beispielsweise nur die gemeinsame Bewegung zweier Bauteile um die gemeinsame Rotationsachse zu erlauben, so wird hierfür eine Ebene verwendet, die die Berührfläche für dies Festlegung im zusammengebauten Getriebe beschreibt oder die die für die Festlegung erforderliche, die Rotationssymmetrie brechende geometrische Form charakterisiert. Beispielsweise ist dies im Fall eines Verzahnungsteils eine in Umfangsrichtung weisende Seitenfläche der Ausfräsung oder Nut für die Passfeder oder eine, die Symmetrieachse enthaltende Ebene, die die Mittelebene in Umfangsrichtung dieser Ausfräsung oder Nut markiert, oder die Berührlinie in einer Position in einer Zahnflanke. Im Fall einer Wellenverbindung, also Kupplung, wird eine Axialebene gewählt, die die Angriffsflächen, also Abschrägungen, für die Kraftübertragung charakterisiert, oder eine Ebene, die in dieser Angriffsfläche liegt.

Zur Kennzeichnung von nicht-rotationssymmetrischen Bauteilen, beispielsweise Gehäusedeckeln oder Gehäusen von Anbauteilen wie Pumpen, Druckausgleichs- oder Ölvorratsbehältern, Filtern, Kühlern oder elektronischen Komponenten, werden die Innenflächen von wenigstens zwei Bohrungen in den Bauteilen verwendet, wobei die Bohrungen zur Montage Schrauben, Niete oder Bolzen aufnehmen, sowie eine Ebene, welche die physikalische Auflagefläche des Bauteils auf einem anderen Bauteil beschreibt.

Somit ist klar, dass an jedem Bauteil wenigstens eine Hilfsfigur gekennzeichnet ist, welche eine eindeutig festgelegte Symmetrieachse einer Rotationssymmetrie aufweist.

Bei der Kennzeichnung der Hilfsfiguren versteht sich, dass jeweils nicht die unendlich ausgedehnte mathematische Abstraktion gewählt wird, sondern ein endlicher, beispielsweise auf die Abmessungen des Bauteils bezogener, Anteil hiervon.

In der Spalte "Verknuepfung" in Figur 4a/b ist im Fall, dass die Regel eine Verknüpfungs-Regel ist, der CAD-Verknüpfungsbefehl angegeben, der die beiden Hilfsfiguren in einen räumlichen Bezug setzt, indem ein räumlicher, relativer Bewegungsfreiheitsgrad der beiden Hilfsfiguren festgelegt wird. Die Liste der möglichen Verknüpfungsbefehle umfasst die in CAD-Standardsoftware bekannten Standardverknüpfungen deckungsgleich, parallel, senkrecht, tangential, konzentrisch, mit Abstand behaftet, mit Winkel beaufschlagt. Der Verknüpfungsbefehl ist mit einer die gegenseitige Orientierung betreffende Verknüpfungsausrichtung weiter spezifizierbar, wobei die Werte ausgerichtet und gegenausgerichtet vergebbar sind. Es sind aber auch erweiterte Verknüpfungen vorsehbar.

Beispielsweise beschreibt Zeile 123 der Tabelle in Fig. 4b eine Verknüpfungsregel, bei der eine Fläche "F_PF_1" in dem Bauteil mit dem Bauteilverwendungskennzeichen "Lag4" deckungsgleich und gegenausgerichtet mit einer Fläche "F_PF_2" " in dem Bauteil mit dem Bauteilverwendungskennzeichen "Fla4" verknüpft wird. Genauer wird in diesem Beispiel also ein Lager für den Flansch für die Wellenöffnung bei Wellenlage "4" relativ zu dem Flansch so ausgerichtet, dass eine Fläche am Lager, hier die durch eine Seitenfläche des Lagers gehende Ebene, mit einer Fläche des Flansches, hier die Ebene, in der die Berührfläche des Flansches mit dem Lager verläuft, deckungsgleich liegt, wobei das Lager auf einer festgelegten Seite des Flansches angeordnet ist. Mit Blick auf Figur 7 wird eine Seitenfläche des Lagers mit der Oberfläche 704 in Deckung gebracht.

Beispielsweise beschreibt Zeile 140 der gleichen Tabelle, dass die Innenfläche der Zentralbohrung des Zahnrades mit dem Bauteilverwendungskennzeichen "Zah2", Fläche "F_CF_1", konzentrisch zu der Zylinderfläche "F_CF_Zahnrad" der Welle mit dem Bauteilverwendungskennzeichen "Wel2" angeordnet ist, wobei die besagte Zylinderfläche durch die zylindrische Berührfläche der Welle mit dem Zahnrad gegeben ist.

Im Fall einer Muster-Regel nennt "Bezeichnung2" die Bezeichnung eines Musters, das in der CAD-Zeichnung eines jeden Bauteiles des Baukastens definiert ist, das dem Bauteilverwendungskennzeichen unter "LfNr2" zuordenbar ist. Der Eintrag unter "Bezeichnung1" kann frei bleiben.

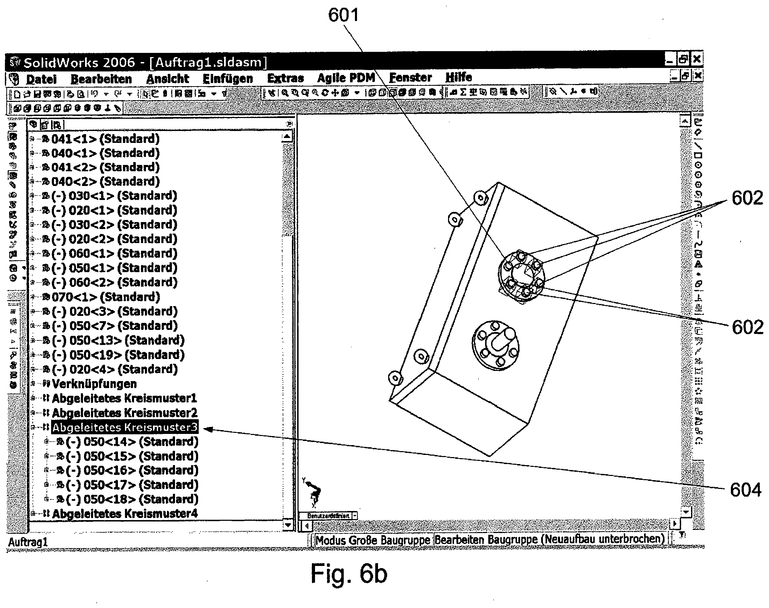

Beispielsweise beschreibt die Muster-Regel 109 in Fig. 4a, dass die Schraube mit dem Bauteilverwendungskennzeichen "Sch1" gemäß dem Muster mit der Bezeichnung "Verschraubungsmuster" im Flansch mit dem Bauteilverwendungskennzeichen "Fla1" gemustert werden soll. Ein solches Muster zeigt Figur 6b: Dargestellt ist ein Screenshot einer CAD-Standardsoftware. Dort wird das Ausgangs-Feature 601, eine Schraube, gemustert. Im linken Fenster ist eine Musterliste 604 ersichtlich, die ein abgeleitetes Kreismuster beschreibt. Es werden also Kopien der Schraube an den freien Ecken eines vorher festgelegten Sechsecks eingefügt, wodurch gemusterte Features 602 gebildet werden. Dementsprechend sind in der Auftrags-Stückliste 102 mit dem Bauteilverwendungskennzeichen "Sch1" sechs Schrauben "050" aufgeführt.

Die Wissensbasis-Datenbank 103 enthält zu jeder Regel weitere Angaben:
Erstens ist in der Spalte "WL" bezeichnet, auf welche Wellenlage die Regel Anwendung findet. Die Bezeichnung erfolgt in der oben beschrieben Weise, wobei eine einzelne Null bedeutet, dass die Regel für alle Wellenlagen anzuwenden ist.

Zweitens gibt die Spalte "Konfig." an, welche CAD-Darstellungsform gewählt werden soll. Mögliche Werte sind hier "Standard" oder "Details" oder "reduziert", wobei bei letzterer beispielsweise ein Zahnrad als Zylinder ohne Zähne dargestellt wird. Weitere mögliche Bezeichnungen für Werte dieser Spalte sind in Weiterbildungen frei wählbar.

Drittens ist in der Spalte "Ausrichtung" festgelegt, ob die Verknüpfung zur endgültigen Festlegung der Bauteile dient - dann lautet der Eintrag "zwingend" -, oder ob eine Vorpositionierung erfolgt - dann lautet der Eintrag "Lage". Vorteil der Verwendung von Vorpositionierungen ist, dass Mehrdeutigkeiten vermeidbar sind. Die Spalte "Ausrichtung" bietet somit Platz für ein binärwertiges Attribut, welche bei der Erstellung eines 3D-Modells der Konfigurationsvariante zur Ordnung der Regeln verwendbar ist.

Beispielsweise ist die parallele Ausrichtung zweier Achsen, die senkrecht aufeinander stehen, hinsichtlich der relativen Orientierung mehrdeutig. Eine vorläufige Ausrichtung der zweiten Achse an einer dritten und eine sich anschließende Ausrichtung der zweiten Achse an der ersten kann unter Umständen diese Mehrdeutigkeit beseitigen.

Viertens ist eine Spalte für Bemerkungen vorgesehen. Dabei kann es sich um Hinweise handeln, die in einer CAD-Zeichnung der betreffenden Konstruktionsvariante aufscheinen sollen, oder um Kommentare zur Dokumentation, oder um Parameter, die für Erweiterungen des Systems reserviert sind.

Fünftens ist eine Spalte "Aktiv" vorgesehen, in der die logischen Werte "wahr" oder "falsch" stehen können zur Aktivierung oder Deaktivierung einzelner Regel. Somit ist eine Wartung der Wissensbasis-Datenbank 103 durchführbar.

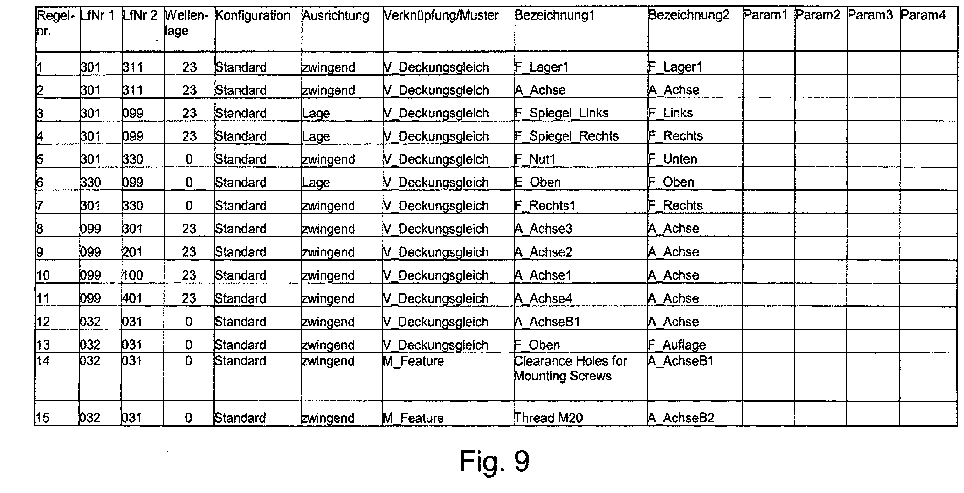

Figur 9 zeigt ein alternatives Beispiel für eine Wissensbasis-Datenbank. Hier werden zur Kennzeichnung der Bauteilverwendungskennzeichen Ziffernfolgen verwendet, und es sind Spalten für vier weitere Parameter vorgesehen. In den Spalten "Bezeichnung1" und "Bezeichnung2" sind geometrische Hilfsfiguren mit Typ, "A" für Achse, "F" für Fläche, "E" für Ebene, und Bezeichnung hinterlegt. In der Spalte "Verknüpfung/Muster" sind Verknüpfungen oder Muster mit Typ, "V" für Verknüpfung und "M" für Muster, und Verknüpfungsbefehl angegeben. Als Verknüpfungsbefehle sind zumindest die oben angeführten StandardVerknüpfungsbefehle verwendbar. Die Regeln mit den Nummern 2, 8, 9, 10, 11 und 12 beschreiben daher die Verknüpfung von jeweils zwei Achsen. Regel Nummer 15 beschreibt beispielsweise das Mustern von Schrauben. Da diese Schrauben nicht von der Anordnung der eintreibenden oder abtreibenden Welle abhängen, ist für Regel Nummer 15 bei Wellenlage eine "0" eingetragen. Die Regel findet somit für alle Wellenlagen Anwendung. Eine Verwechslung dieses Eintrags mit der Bezeichnung Wellenlage "0" gemäß Fig. 8 ist beispielsweise durch Berücksichtigung der Tatsache vermeidbar, dass die Angabe einer Eintriebswelle immer auch die Angabe einer Abtriebswelle erfordert. Ein Eintrag aus einer Ziffer stellt daher einen Sonderfall dar. In alternativen Ausführungsbeispielen wird der Allquantor durch ein gesondertes Symbol markiert.

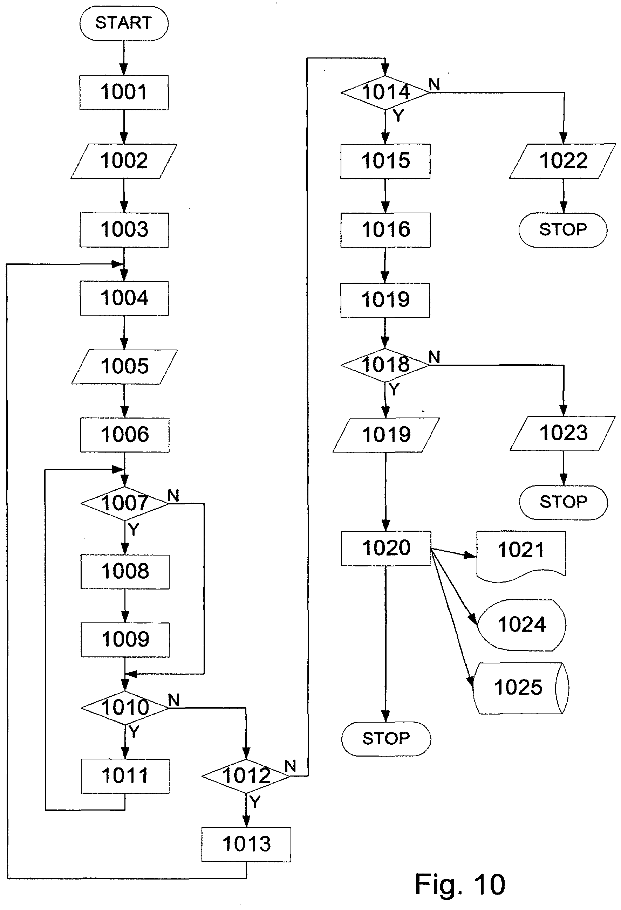

Figur 10 zeigt den Algorithmus, der zur Generierung der CAD-Zeichnung im Montier-Modul 105 implementiert ist.

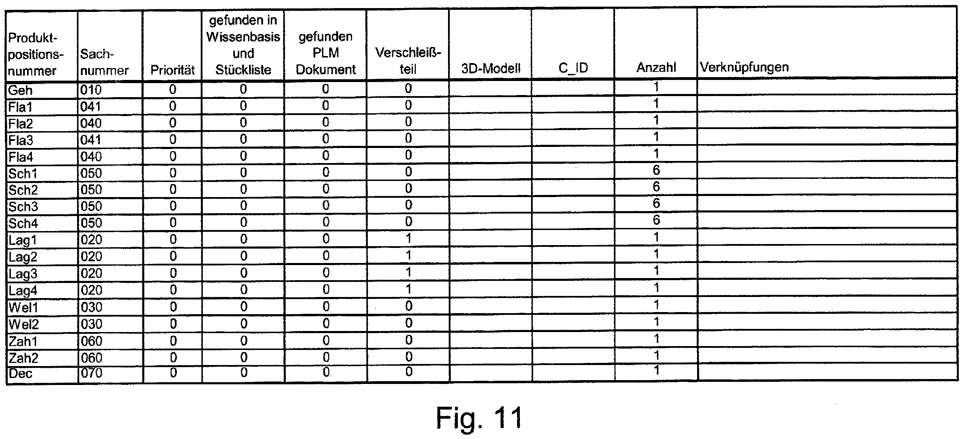

In Schritt 1001 wird aus der Auftrags-Stückliste 102 eine Strukturliste 1002 erstellt. Dazu wird eine Tabelle angelegt, in der jedes Bauteilverwendungskennzeichen der Auftrags-Stückliste 102, die ein CAD-Teil bezeichnet, in eine neue Zeile geschrieben wird. Die resultierende Strukturliste 1002 zum Beispiel aus Fig. 2a ist in Fig. 11 dargestellt. In jeder Zeile werden wie dargestellt zusätzlich zum Bauteilverwendungskennzeichen die Sachnummer, das Flag "Verschleißteil" und die Anzahl aus der Auftrags-Stückliste 102 kopiert, und es werden ein Zähler "Priorität", ein Flag "gefunden in Wissensbasis und Stückliste", ein Flag "gefunden PLM Dokument", jeweils mit dem Startwert 0, und drei weitere Spalten eingerichtet. Der Zähler dient der späteren Sortierung der Einträge in der Strukturliste 1002, die Flags dienen der Fehlerüberwachung und Fehlerfindung.

Die Strukturliste 1002 wird, wie in Figur 10 dargestellt, in einer ersten Schleife weiterbearbeitet: In einem Schritt 1003 wird das Bauteilverwendungskennzeichen des obersten Eintrags in der Strukturliste ausgewählt. In der Auftrags-Stückliste 102 aus Figur 2a ist dies "Geh".

Anschließend wird im Schritt 1004 eine Unterliste 1005 angelegt, in der alle diejenigen Regeln aus der Wissensbasis-Datenbank 103 eingetragen werden, für die das erste Bauteilverwendungskennzeichen der Regel, also das in der Wissensbasis-Datenbank 103 in der betreffenden Regel unter LfNr1 eingetragene Bauteilverwendungskennzeichen, das ausgewählte Bauteilverwendungskennzeichen ist.

Die Wissensbasis-Datenbank 103 ist hierzu als SQL-Datenbank ausgeführt und weist eine SQL-Schnittstelle auf, über welche das Montier-Modul 105 Suchanfragen übermittelt und Suchergebnisse empfängt.

Beispielsweise besteht diese Unterliste 1005 für das Bauteilverwendungskennzeichen "Geh" gemäß Wissensbasis-Datenbank nach Fig. 4a/b aus keinem Element, während eine entsprechende Unterliste für "Sch1" die Regeln 108, 109 und 110 enthält.

Diese Unterliste 1005 wird nun in einer zweiten Schleife ausgewertet.

Im Schritt 1006 wird der oberste Eintrag der Unterliste 1005 ausgewählt.

In der Abfrage 1007 wird geprüft, ob das zweite Bauteilverwendungskennzeichen der ausgewählten Regel in der Strukturliste 1002 enthalten ist. Dies geschieht in einer Schleife, in der für jeden Zeileneintrag der Strukturliste 1002 geprüft wird, ob dessen Bauteilverwendungskennzeichen mit dem momentan betrachteten zweiten Bauteilverwendungskennzeichen übereinstimmt.

Ist die Antwort positiv (Y), so ist die Regel für die aktuelle Konstruktionsvariante relevant, und es wird in Schritt 1008 die Nummer der Regel in der Strukturliste 1002 in der Spalte "Verknüpfungen" zum ausgewählten Bauteilverwendungskennzeichen notiert und es wird in Schritt 1009 zum einen der Zähler "Priorität" zum zweiten Bauteilverwendungskennzeichen der aktuellen Regel inkrementiert und es werden zum anderen die Flags "gefundenin Wissensbasis und Stückliste" zu beiden Bauteilverwendungskennzeichen gesetzt.

Alternativ werden die Regeln zu einem Bauteil in einem Array abgelegt, und es wird in unter "Verknüpfungen" ein Zeiger auf das betreffende Array notiert.

Unter "Verknüpfungen" bzw. in dem erwähnten Array werden auch gefunden Muster-Befehle vermerkt.

Ist die Antwort auf die Abfrage 1007 negativ (N), so wird direkt mit Schritt 1010 fortgefahren.

In der Abfrage 1010 wird geprüft, ob weitere Regeln in der Unterliste 1005 vorhanden sind.

Ist dies der Fall (Y), so wird in einem nächsten Schritt 1011 die nächstfolgende Regel aus der Unterliste 1005 ausgewählt und es wird mit Schritt 1007 fortgefahren.

Ist die Antwort auf die Abfrage 1010 negativ (N), so ist die Unterliste 1005 vollständig ausgewertet, die zweite Schleife also beendet, und es wird mit Schritt 1012 fortgefahren.

In der Abfrage 1012 wird geprüft, ob weitere Einträge in der Strukturliste 1002 vorhanden sind.

Ist dies der Fall (Y), so wird so wird in einem nächsten Schritt 1013 das nächstfolgende Bauteilverwendungskennzeichen in der Strukturliste 1002 ausgewählt und es wird mit Schritt 1004 fortgefahren.

Ist die Antwort auf die Abfrage 1012 negativ (N), so ist die Strukturliste 1002 vollständig ausgewertet, die erste Schleife also beendet, und es wird mit Schritt 1014 fortgefahren.

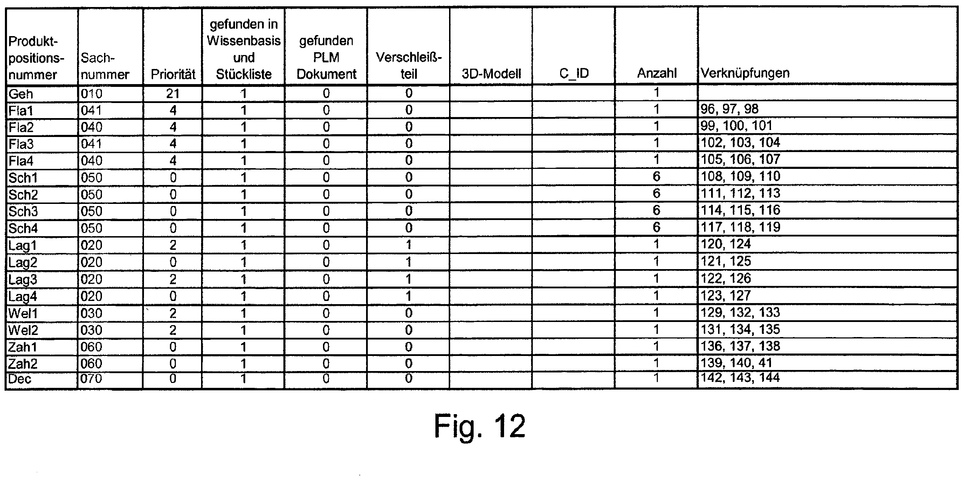

In Schritt 1014 enthält die Strukturliste zur Auftrags-Stückliste 102 nach Fig. 2a die in Fig. 12 angegebene Information.

In der Abfrage 1014 wird geprüft, ob für jedes Bauteilverwendungskennzeichen in der Strukturliste das Flag "gefunden in Wissensbasis und Stückliste" gesetzt ist.

Ist dies nicht der Fall, so wird in Schritt 1022 eine Fehlermeldung über eine fehlerhafte Wissensbasis-Datenbank ausgegeben, und der Algorithmus beendet sich.

Ist die Antwort auf die Abfrage 1014 positiv (Y), so werden in Schritt 1015 zu jedem Bauteilverwendungskennzeichen der Strukturliste 1002 die notierten Verknüpfungen geordnet. Dabei sollen Regeln mit dem Wert "Lage" unter "Ausrichtung" zuerst stehen, Regeln, die Flächen, Ebenen oder Kanten verknüpfen, an zweiter Stelle, Regeln, die Achsen verknüpfen, an dritter Stelle und Regeln, die Muster-Befehle beschreiben, an vierter Stelle. Innerhalb gleichrangiger Regeln wird nach aufsteigender Regelnummer angeordnet. Diese Ordnungsvorschrift ergibt sich aus den Eigenarten der verwendeten CAD-Standardsoftware 111 im Umgang mit Verknüpfungen. Führt beispielsweise die Ausrichtung von Achsen eher zu Unbestimmtheiten als die Ausrichtung von Ebenen, so ist bei der Sortierung der Verknüpfungen in der Strukturliste 1002 den Ebenen ein Vorrang zu geben vor den Achsen. Ebenso ist vorteilhaft die Reihenfolge gleichrangiger Zeileneinträge untereinander durch eine Ordnung im Bauteilverwendungskennzeichenkatalog steuerbar.

In Schritt 1016 wird die Strukturliste nach absteigendem Zählerwert in der Spalte "Priorität" geordnet. Innerhalb gleichrangiger Einträge entscheidet die Anordnung in der Liste der Bauteilverwendungskennzeichen, wie sie in der Tabelle in Figur 3 oder in der Konfigurations-Datenbank 114 abgelegt ist. Im Beispiel nach Figur 12 bleibt somit der oberste Eintrag, der das Gehäuse betrifft, stehen. Dies ist auch schon alternativ in Figur 2b ablesbar, da am Gehäuse Kanten enden, vom Gehäuse aber keine Kanten abgehen. Die Verknüpfungen der Wissensbasis-Datenbank decken sich aber nicht unbedingt mit dem Graphen nach Figur 2b. Beispielsweise kann es vorteilhaft sein, eine Welle in axialer Richtung an einem Lager auszurichten, die Wellenachse aber in der Bohrung des Gehäuses konzentrisch festzulegen.

In Schritt 1017 in Figur 10 wird zu jedem Bauteilverwendungskennzeichen die CAD-Zeichnung der zugehörigen Sachnummer in der Metadatenbank 112 gesucht. Ist eine CAD-Zeichnung vorhanden, so wird in der Strukturliste 1002 deren C_ID-Nummer vermerkt und es wird dort das Flag "gefunden PLM Dokument" gesetzt.

In der Abfrage 1018 wird geprüft, ob alle Flags "gefunden PLM Dokument" gesetzt sind. Ist dies nicht der Fall (N), so beendet sich der Algorithmus nach einer entsprechenden Fehlermeldung 1023.

Ist die Antwort auf die Abfrage 1018 positiv (Y), so sind alle notwendigen Daten bereitgestellt für die Erstellung der Zusammenbau-Zeichnung der Konstruktionsvariante.

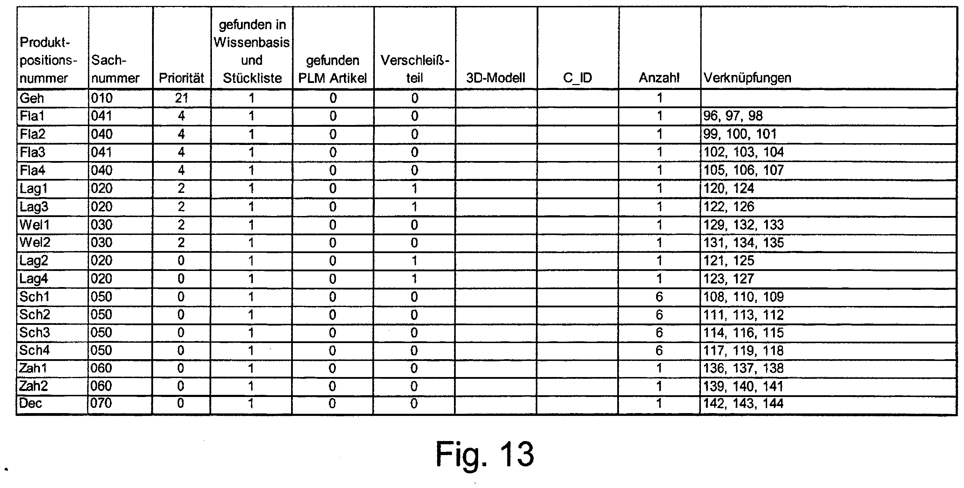

In Schritt 1019 liegt die nun fertig befüllte und geordnete Strukturliste 1002 vor, wie sie für das betrachtete Beispiel in Fig. 13 dargestellt ist.

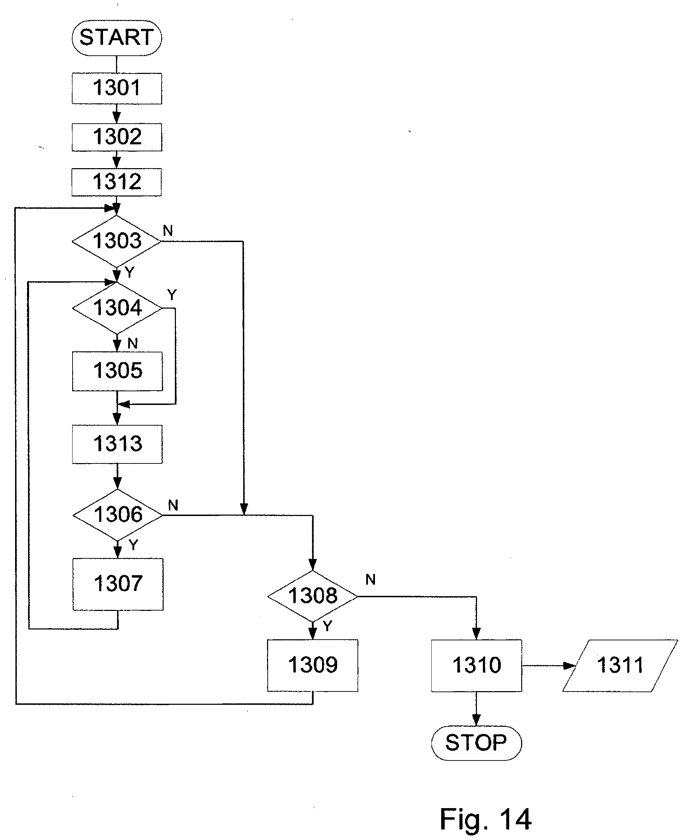

In Schritt 1020 werden die Einträge der Strukturliste 1002 mittels eines Zusatzprogramms zur Anfertigung eines 3D-CAD-Modells (113, 1021, 1024, 1025) der Konstruktionsvariante ausgewertet. Dieses Zusatzprogramm ist als Darstellungs-Modul im Montier-Modul 105 integriert und wird unten im Zusammenhang mit Fig. 14 beschrieben. Insbesondere werden durch das Darstellungs-Modul die in der Strukturliste 1002 vermerkten CAD-Zeichnungen der Bauteile in eine CAD-Standardsoftware 111 geladen und in der angegebenen Reihenfolge mittels der notierten und sortierten Regeln verknüpft bzw. gemustert. Die CAD-Standardsoftware 111 erstellt ein 3D-Modell zu der Konfigurationsvariante unter Anleitung des Darstellungs-Moduls.

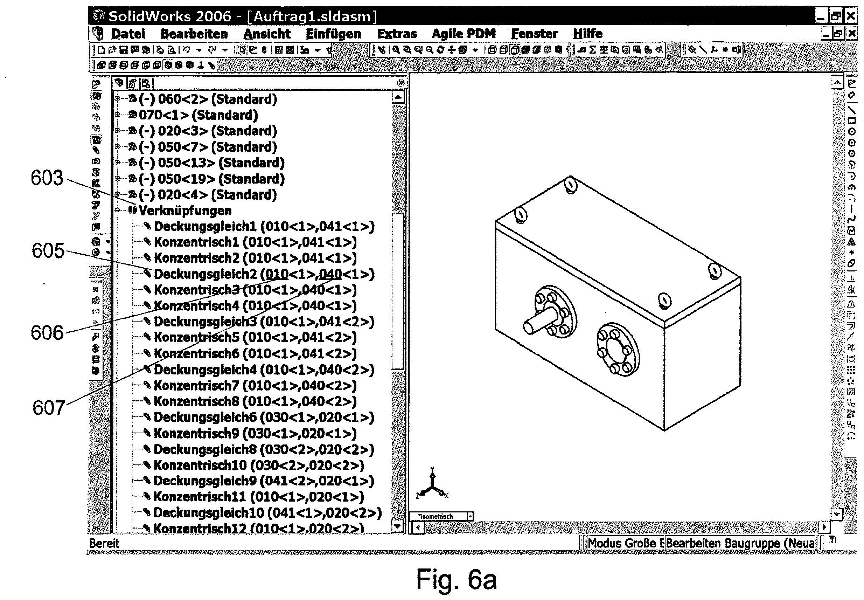

Ein Beispiel einer Ansicht eines fertigen CAD-Modells in der CAD-Standardsoftware 111 zeigen die Figuren 6a und 6b in Form eines Screenshots. Im linken Fenster der Anzeige sind in Figur 6a in typischer Form die Verknüpfungen als Verknüpfungsliste 603 und in Figur 6b die Muster-Befehle in Form einer Musterliste 604 angegeben. In der Verknüpfungsliste 603 sind die Verknüpfungsbefehle 605, die Standardverknüpfungsbefehle wie beschrieben sein können, mit jeweils einem ersten verknüpften Bauteil 606 und einem zweiten verknüpften Bauteil 607 angegeben. In der bezeichneten Verknüpfung werden also das Gehäuse "010" und der Flansch für Wellenöffnung bei Wellenlage 4 "040" bezüglich einer Hilfsfigur deckungsgleich ausgerichtet, vgl. Figur 2a und Figur 3.

Figur 5 zeigt die Ausgabe der angefertigten CAD-Zeichnung als 3D-Zeichnung mit Bauteilverwendungskennzeichen 501. In der oberen Darstellung in Figur 5 wurde der Deckel 502 ausgeblendet, um das Innenleben des Getriebes sichtbar zu machen.

Nach der Anfertigung des 3D-Modells und der Ausgabe von daraus abgeleiteten Darstellungen auf Papier 1021, auf einem Monitor 1024 oder der Abspeicherung des 3D-Modelss auf ein Speichermedium 1025 beendet sich der Algorithmus. Mit der CAD-Standardsoftware 111 sind aus dem 3D-Modell weitere Darstellungen ableitbar, beispielsweise Explosionsdarstellungen, Schnittdarstellungen, Detaildarstellungen. Zur Ableitung von Schnittdarstellungen sind vorzugsweise an Gehäuseteilen oder anderen Bauteilen Ebenen definiert, auf die sie die gewünschten Schnittdarstellungen beziehen lassen.

Figur 14 zeigt den Algorithmus, der im Darstellungs-Modul realisiert ist. In einem ersten Schritt 1301 greift das Darstellungs-Modul auf die CAX-Schnittstelle 110 zu, die daraufhin die für das 3D-Modul benötigten CAD-Daten aus der Meta-Datenbank 112 in die CAD-Standardsoftware 111 lädt.

In einem nächsten Schritt 1302 gibt das Darstellungs-Modul der CAD-Standardsoftware 111 den Befehl, eine Baugruppe anzulegen.

In einem nächsten Schritt 1312 gibt das Darstellungs-Modul der CAD-Standardsoftware 111 den Befehl, das in der sortierten Strukturliste 1002 zuoberst stehende Bauteil in die Baugruppe einzufügen.

In einem nächsten Schritt prüft das Darstellungs-Modul, ob zu dem Bauteil in der Strukturliste 1002 eine Verknüpfung vermerkt ist.

Ist dies nicht der Fall (N), so fährt das Darstellungs-Modul mit der Bearbeitung von Schritt 1308 fort. Andernfalls (Y) prüft das Darstellungs-Modul, ob das zweite an der Verknüpfung beteiligte Bauteil schon in die Baugruppe eingefügt ist.

Ist dies nicht der Fall (N), so gibt das Darstellungs-Modul der CAD-Standardsoftware 111 in Schritt 1305 den Befehl, das zweite an der Verknüpfung beteiligte Bauteil in die Baugruppe einzufügen. Andernfalls (Y) wird direkt mit Schritt 1313 fortgefahren.

In Schritt 1313 gibt das Darstellungs-Modul der CAD-Standardsoftware 111 die Befehle, die in der betreffenden Verknüpfung der betreffenden Bauteile vermerkten geometrischen Hilfsfiguren zu selektieren und die vermerkte Verknüpfung, oder gegebenenfalls den Muster-Befehl, auszuführen. Somit sind die betreffenden Bauteile bezüglich des mit der betreffenden Regel eingeschränkten Freiheitsgrads ausgerichtet bzw. festgelegt.

In Schritt 1306 prüft das Darstellungs-Modul, ob weitere Regeln für das erste Bauteil in der Strukturliste 1002 vermerkt sind. Ist dies der Fall (Y), so wird die nächste Regel ausgewählt, und es wird mit Schritt 1304 fortgefahren. Andernfalls (N) wird mit Schritt 1308 fortgefahren.

In Schritt 1308 sind somit die Verknüpfungen für das in der Strukturliste 1002 zuoberst aufgeführte, erste Bauteil abgearbeitet.

In Schritt 1308 prüft das Darstellungs-Modul, ob weitere Bauteile in der Strukturliste aufgeführt sind. Ist dies der Fall (Y), so wird das nächste Bauteil ausgewählt, und es wird mit Schritt 1303 fortgefahren. Andernfalls (N) sind alle Bauteile abgearbeitet, und es wird mit Schritt 1310 fortgefahren.

In Schritt 1310 sind alle Verknüpfungen aller Bauteile abgearbeitet, und es wird das fertig berechnete 3D-Modell 1311 ausgegeben. Diese Ausgabe erfolgt vorzugsweise über einen Monitor oder über andere geeignete Anzeigemittel.

Vorzugsweise wird das berechnete 3D-Modell 1311 in der Metadatenbank 112 abgelegt.

Nach Erstellung des 3D-Modells 1311 beendet sich das Darstellungs-Modul. Der Anwender kann nun beispielsweise konstruktive Sonderwünsche, die nicht in der Konfiguration erfassbar waren, nachträglich einfügen und somit individuell zugeschnittene Konstruktionszeichnungen erstellen.

Die Erfindung ist nicht auf die in der Beschreibung und in den Figuren offenbarten Datenformate und Datenumfänge beschränkt. Alternative Formen der Anordnung der Spalten und Zeilen, oder beispielsweise die Anordnung in Listen sind möglich, und der Informationsgehalt ist erweiterbar durch Aufnahme von zusätzlicher Information in jeder Zeile der Tabelle. Ebenso sind die dargestellten Tabellen zu einer Gesamtmatrix vereinigbar oder in Untertabellen aufteilbar.

Ähnliches gilt für die Beschreibung der Hinterlegung und der Übermittlung von Daten. Die Erfindung ist nicht beschränkt auf die konkret beschriebenen Formen. Diese wurden lediglich ausgewählt, um die Darstellung klarer und einfacher zu gestalten. So ist insbesondere die Erfindung hinsichtlich der Hinterlegung der Inhalte der Figuren nicht auf die in diesen Figuren verwendete Formatierung, Anordnung oder Kodierung beschränkt.

Aus der Beschreibung ist ersichtlich, dass das Bauteilverwendungskennzeichen als Platzhalter für die konkreten Bauteile, die ihrerseits durch die Sachnummer gekennzeichnet werden, dient. Das Bauteilverwendungskennzeichen ist somit ein Kennzeichen, das die Verwendung bestimmter Bauteile an einer bestimmten, abstrakt, also nicht auf eine konkrete Variante der Baureihe bezogen, gegebenen Position an den Variante der Baureihe angibt, mithin eine Bauteilpositionsnummer. Das Bauteilverwendungskennzeichen gibt somit die Funktion an, die ein Bauteil in einer Gruppe von Varianten ausübt, wenn es an der durch das Bauteilverwendungskennzeichen bezeichneten Position verbaut wird. Dabei müssen die Bauteile, die einem Bauteilverwendungskennzeichen zugeordnet werden können, übereinstimmende Merkmale aufweisen. Diese übereinstimmenden Merkmale sind zumindest für das Bauteil typische geometrische Hilfsfiguren, die in den CAD-Zeichnungen der betreffenden Bauteile definiert sein müssen. Beispielsweise können derartige Hilfsfiguren im Fall einer Schraube die Achse der Schraube und die im eingeschraubten Zustand das aufnehmende Teil berührende Fläche das Schraubenkopfes sein, oder die Einhüllende des Gewindes und besagte Fläche. Die definierten Hilfsfiguren dienen der Festlegung der räumlichen Lage des Bauteils. Bei symmetrischen Bauteilen muss diese nicht vollständig festgelegt sein.

Im Sinne der DIN-Vornorm DIN-V 4002-2 sind die Bauteile somit Objekte, deren Merkmale insbesondere die erwähnten geometrischen Hilfsfiguren sind. Die

Bauteilverwendungskennzeichen sind in dieser Hinsicht Objektklassen. Die Bauteilverwendungskennzeichen übernehmen vorteilhaft die mit Positionsnummern in technischen Zeichnungen verbundenen Aufgaben, insbesondere die Kennzeichnung der Bauteile einer Konstruktionsvariante oder einer Baugruppe in einer technischen Zeichnung. Diese Bauteilverwendungskennzeichen oder auch Bauteilpositionsnummern erweitern die Aufgabe gewöhnlicher Positionsnummern dahingehend, dass in verschiedenen Konstruktionsvarianten Bauteile mit gleicher Funktion, beispielsweise das Lager einer Welle in einer bestimmten Wellenlage oder eine Schraube für den Wartungs-Deckel des Getriebes, mit demselben Bauteilverwendungskennzeichen bezeichnet werden beziehungsweise demselben Bauteilverwendungskennzeichen zugeordnet werden.

Die Erfindung ist nicht auf die verwendeten Begriffe beschränkt. Die Begriffe dienen der Verdeutlichung der Hierarchie, in der die Daten des Baukastens organisiert sind. Andere Begriffssysteme sind daher zur Beschreibung der Erfindung verwendbar. Ein alternativer Begriff für Bauteilverwendungskennzeichen ist beispielsweise Laufnummer oder Bauteilpositionsnummer.

Vorteil der Erfindung ist unter anderem, dass möglichst konsequent alle Arbeitsschritte mit der jeweils minimal nötigen Datenmenge abgearbeitet werden, indem Objektklassen statt der Objekte mit Merkmalen betrachtet werden.

In weiteren Ausführungsbeispielen sind mittels des Montier-Moduls 105 weitere CAD-Zeichnungstypen erstellbar, beispielsweise Explosionszeichnungen, Zeichnungen mit farblich markierten Verschleißteilen, zweidimensionale Projektionen, Schnittansichten, Teildarstellungen, Darstellungen von Baugruppen oder Funktionsmodelle, die die Bewegung der beweglichen Bauteile simulieren, oder es wird in einer Kollisionsprüfung geprüft, ob Bauteile überlappen.

Bei einer Kollisionsprüfung wird insbesondere geprüft, ob sich einzelne Bauteile überlappen. Ist dies der Fall, so war die Konfiguration fehlerhaft, und der Anwender erhält einen entsprechenden Hinweis. Somit ist vermieden, dass erst bei einer anschließenden Montage der physisch-realen Bauteile ein Konfigurationsfehler bemerkt wird. Eine Ausnahme bilden in dieser Hinsicht Verzahnungsteile, die sich für eine Drehmomentübertragung überlappen müssen, wenn die Verzahnung nur als Zylinder dargestellt wird. Hier wird entweder die Fehlermeldung bei Überlappung von Verzahnungsteilen unterdrückt, oder es wird die Darstellung der Verzahnung eingeschaltet und jedes Verzahnungsteil um seine Symmetrieachse gedreht, bis eine Passung, also ein physikalisch wirksamer Zahneingriff, erreicht ist, wobei nach eine Drehung um 360° ohne Passungsergebnis eine Fehlermeldung ausgegeben wird und wobei bereits in Passung befindliche Verzahnungsteile mitbewegt werden, also um ihre jeweilige Achse derart mitgedreht werden, dass der korrekte Zahneingriff erhalten bleibt, also dass die betreffenden Verzahnungen ordnungsgemäß miteinander kämmen.

Liegt eine Getriebeverzahnung vor, bei der die Verzahnungen miteinander bestimmungsgemäß kämmen, entweder erreicht durch entsprechende Regeln oder wie beschrieben durch sukzessives Ermitteln der Passungen, so wird in einem weiteren Ausführungsbeispiel die Funktion des Getriebes am 3D-Modell graphisch verdeutlicht und/oder simuliert.

In einem weiteren Ausführungsbeispiel wird anhand der Reihenfolge der Verknüpfungen eine Montageanleitung erstellt. Dazu werden die Regeln in der Wissensbasis-Datenbank 103 entsprechend geordnet und das Bauteilverwendungskennzeichen entsprechend definiert. Insbesondere wird vermieden, dass in einem Graph wie in Figur 2b eine gerichtete Kante auf ein unzugängliches Bauteil zeigt. Es wird also so geordnet, dass ein Graph wie in Figur 2b von innen nach außen, also den gerichteten Kanten entgegengesetzt, die Montagereihenfolge wiedergibt.

Bei einem weiteren Ausführungsbeispiel wird, wie folgend beschrieben, aus einem im Rechnersystem vorliegenden 3D-Modell der gewünschten Getriebevariante nun eine Reihenfolge für Demontageschritte automatisiert ermittelt. Hierzu wird zunächst die Kollisionsüberwachung der 3D-CAD-Standardsoftware aktiviert. Nun werden sukzessive die Ausrichtungsbefehle aufgelöst, wobei nach jeder einzelnen Auflösung geprüft wird, ob sich das betreffende Bauteil ohne Kollision entfernen lässt. Es werden hierbei zuerst Ausrichtungsbefehle aufgelöst, also deaktiviert, die Radialebenen an rotationssymmetrischen Bauteilen betreffen, bevor Ausrichtungsbefehle aufgelöst werden, die Achsen oder Zylindermantelflächen dieser Bauteile betreffen. Die Auflösung von Ausrichtungsbefehlen, die Axialebenen betreffen, kann zum Schluss erfolgen. Die Reihenfolge, in der die einzelnen Bauteile auf Demontierbarkeit geprüft werden, orientiert sich ebenfalls an der zuvor ermittelten "Priorität", allerdings nun in umgekehrter Reihenfolge, weil beispielsweise eine Schraube ohne weiteres aus einem Gehäuse demontierbar ist, das Gehäuse aber nicht in einem Schritt von der Vielzahl mit ihm verbundenen Bauteilen trennbar ist. Es wird somit mit Bauteilen begonnen, die (oder deren zugehöriges Bauteilverwendungskennzeichen) den niedrigsten Wert für die "Priorität" aufweisen. Ergibt die Kollisionsprüfung, dass ein Bauteil durch Auflösen einer Radialebene aus dem Getriebe entfernbar ist, so wird die koaxiale Ausrichtung aufgelöst und gegebenenfalls die verbleibende Ausrichtung in Umfangsrichtung, und das Bauteil wird in einer geordneten Liste notiert. Nun wird mit dem verbleibenden Getriebe in der beschriebenen Weise fortgefahren.

Alternativ oder unterstützend wird zur Ermittlung der Demontagereihenfolge wie beschrieben die Ordnung der Bauteilverwendungskennzeichen verwendet.

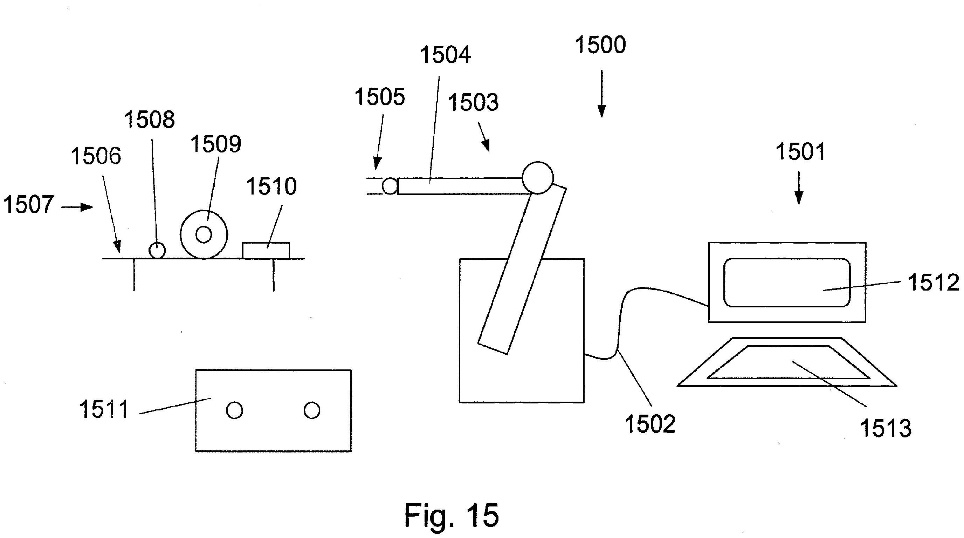

Ist das Getriebe vollständig in Einzelteile zerlegt, so wird die ermittelte geordnete Liste, also die Reihenfolge der Demontageschritte, an die in Figur 15 dargestellte Steuereinheit 1501 einer Fertigungsanlage 1500 übermittelt, wobei die Steuereinheit 1501 über eine Steuerleitung 1502 wenigstens ein Handhabungsgerät 1503 ansteuert. Diese Steuereinheit 1501 steuert das Handhabungsgerät 1503 derart an, dass das Handhabungsgerät 1503 mit einem an einem gelenkigen Greifarm 1504 beweglich befestigten Greifwerkzeug 1505 physikalisch-materiell auf einer Ablage 1506 vorliegende Bauteile 1507 in umgekehrter Reihenfolge der Demontageschritte ergreift und an ihren Platz bringt, der in dem 3D-Modell vorgegeben ist. Die Figur 15 zeigt beispielhaft eine Welle 1508, ein Zahnrad 1509 und einen Gehäusedeckel 1510, die verbaut werden sollen. Statt auf der Ablage 1506 können die Bauteile 1506 auch in einem Hochregallager bereitgehalten und dem Handhabungsgerät 1503 mit einem Regalbediengerät bereitgestellt werden. Begonnen wird wieder mit dem anhand des Prioritätszählers ermittelten Gehäusegrundkörper 1511. Beim Einfügen oder Einpassen der Bauteile 1507 berücksichtigt die Steuereinheit die räumliche Ausdehnung der bereits verbauten Bauteile und ermittelt eine kollisionsfreien Weg, entlang dessen des Handhabungsgerät 1503 das aktuelle Bauteil 1508, 1509, 1510 an seine vorbestimmte Position führt. Dass ein solcher Weg existiert, ist durch die zuvor ermittelte DemontageReihenfolge, die nun in umgekehrter Weise abgearbeitet wird, sichergestellt. Zur Festlegung von Anpressmomenten, beispielsweise für Schrauben, wird auf Angaben zurückgegriffen, die entweder zu dem konkreten Bauteil oder aber in der betreffenden Regel, beispielsweise in einer der Spalten "Param1" bis "Param4" in Figur 9 zusätzlich abgelegt sind.

In einer Weiterbildung ist zusätzlich das vorstehend beschriebene Verfahren zur Erstellung eines 3D-Modells auf der Steuereinheit 1501 ausführbar, und die Steuereinheit 1501 verfügt über Eingabemittel 1513, beispielsweise über eine Tastatur, eine Maus oder ein Lesegerät eines Massespeichers, über das zumindest die Regeln der Wissensbasis-Datenbank 103 eingegeben werden, und über Ausgabemittel 1512, beispielsweise einen Monitor, einen Drucker, einen Plotter, ein Schreibgerät eines Massenspeichers und/oder ein weiteres Visualisierungsmittel, mit dem zumindest das fertig zusammengesetzte 3D-Model ausgegeben wird.

Zur Erstellung einer Wissensbasis beispielsweise für die Herstellung von Möbeln aus einem Baukasten von Möbelteilen orientiert sich die Kennzeichnung von Hilfsfiguren an den Bauteilen daran, dass vornehmlich rechteckige Bauteile auftreten. Auch hier kann sich die Kennzeichnung an den tatsächlich auftretenden Berührflächen orientieren. Beispielsweise wird an zwei Brettern, die im rechten Winkel zueinander zur Bildung einer Schubladenwand oder eines Gehäuses verleimt werden sollen, jeweils eine Stirnfläche, eine Seitenfläche und eine Kantenfläche an den zwei Bauteilen derart ausgezeichnet, das in montierter Position je eine Seitenfläche des einen Bauteils mit einer Stirnfläche des anderen Bauteils fluchtet oder übereinstimmt und die Kantenflächen in einer gemeinsamen Ebene liegen. Zur Festlegung eines Beschlags an einem Brett werden die Innenseiten von zwei Bohrlöchern gekennzeichnet, die mit Innenseiten von Bohrlöchern des Bretts konzentrisch angeordnet sind, sowie die Ebene, die die Auflagefläche des Beschlags auf dem Brett beschreibt.

Als CAD-Standardsoftware ist vorteilhaft ein 3D-CAD-System wie SolidWorks oder Inventor einsetzbar. Aber auch andere, aus dem Nachschlagewerk Wikipedia, deutschsprachige Ausgabe, unter dem Stichwort "Liste mechanischer CAD-Lösungen" in der Version vom 29. November 2006, 12:26 Uhr, bekannte 3D-CAD-Standardsoftware ist vorteilhaft einsetzbar.

### Bezugszeichenliste

- 101: Konfigurator
- 102: Auftrags-Stückliste
- 103: Wissensbasis-Datenbank
- 104: SQL-Schnittstelle
- 105: Montier-Modul
- 106: PLM-Schnittstelle
- 107: Suchmusterdaten
- 108: Suchergebnisdaten
- 109: Lifecycle-Management-Software
- 110: CAX-Schnittstelle
- 111: CAD-Programm
- 112: Metadatenbank
- 113: CAD-Zeichnungen
- 114: Konfigurations-Datenbank
- 601: Ausgangs-Feature
- 602: gemustertes Feature
- 603: Verknüpfungsliste
- 604: Musterliste
- 605: Verknüpfungsbefehl
- 606: erstes verknüpftes Bauteil
- 607: zweites Verknüpftes Bauteil
- 700: Flansch
- 701, 702, 703, 704, 705: Oberfläche
- 706: Schraubenloch
- 1001: Anlegen der Strukturliste
- 1002: Strukturliste
- 1003: Auswahl des obersten Elements
- 1004: Anlegen einer Unterliste
- 1005: Unterliste
- 1006: Auswahl des obersten Elements
- 1007: Abgleich mit Strukturliste
- 1008: Notiere Verknüpfung/Muster
- 1009: Inkrementieren/Flag setzen
- 1010: Abfrage Schleifenende Unterliste
- 1011: Schleifeninkrement Unterliste
- 1012: Abfrage Schleifenende Strukturliste
- 1013: Schleifeninkrement Strukturliste
- 1014: Abfrage fehlende Regel
- 1015: Sortieren der Verknüpfungen
- 1016: Sortieren der Strukturliste
- 1017: Abfrage fehlende CAD-Zeichnung
- 1018: Einlesen der CAD-Zeichnungsdaten
- 1019: fertiggestellte Strukturliste
- 1020: Anfertigung des 3D-Modells
- 1021: CAD-Zeichnung
- 1022: Fehlermeldung "Wissensbasis-Datenbank unvollständig"
- 1023: Fehlermeldung "CAD-Zeichnung fehlt"
- 1024: CAD-Darstellung einem Bildschirm
- 1025: Datenspeicher
- 1301: Einladen der CAD-Teile
- 1302: Erstellen einer Baugruppe
- 1303: Abfrage, ob eine Regel vermerkt ist
- 1304: Abfrage, ob zweites Bauteil schon in Baugruppe
- 1305: Zweites Bauteil einfügen
- 1306: Abfrage, ob weitere Regel vermerkt
- 1307: nächste Regel auswählen
- 1308: Abfrage, ob weiteres Bauteil vermerkt
- 1309: nächstes Bauteil auswählen
- 1310: Ausgabe 3D-Modell
- 1311: 3D-Modell
- 1312: Einfügen 1. Bauteil
- 1313: Verknüpfung der Bauteile
- 1500: Anlage
- 1501: Steuereinheit
- 1502: Steuerleitung
- 1503: Handhabungsgerät
- 1504: Greifarm
- 1505: Greifwerkzeug
- 1506: Ablage
- 1507: Bauteile
- 1508: Welle
- 1509: Zahnrad
- 1510: Gehäusedeckel
- 1511: Gehäusegrundkörper

## Patentansprüche

1. Verfahren zum Herstellen einer Konstruktionsvariante eines Getriebes einer Baureihe unter Verwendung einer Datenverarbeitungsanlage,
wobei das Getriebe aus Bauteilen eines Baukastens zusammengesetzt ist,
**dadurch gekennzeichnet,**
- **dass** jedem Bauteil des Baukastens Hilfsfiguren zugeordnet werden,
wobei wenigstens ein Bauteil des Baukastens eine Welle ist und dieser Welle die Symmetrieachse der Welle oder eine konzentrisch zu dieser Symmetrieachse angeordnete Zylinderfläche als Hilfsfigur zugeordnet ist
und wobei wenigstens ein Bauteil des Baukastens ein Verzahnungsteil ist und diesem Verzahnungsteil wenigstens eine, eine Seitenfläche des Verzahnungsteils umfassende Ebene oder eine hierzu parallel verlaufende Ebene als Hilfsfigur zugeordnet ist,
- **dass** in einen Regelspeicher Regeln eingegeben werden, indem für jede Regel wenigstens ein erstes Bauteilverwendungskennzeichen, ein zweites Bauteilverwendungskennzeichen, eine erste Hilfsfigur, eine zweite Hilfsfigur und ein Ausrichtungsbefehl benannt werden, wobei der Ausrichtungsbefehl eine Ausrichtung der ersten Hilfsfigur relativ zu der zweiten Hilfsfigur erzwingt,
- **dass** aus den Bauteilen des Baukastens Bauteilsorten gebildet sind, wobei den Bauteilen einer jeweiligen Bauteilsorte gleiche Hilfsfiguren zugeordnet sind, und die Bauteilverwendungskennzeichen jeweils einer Bauteilsorte zugeordnet sind und die Verbindung der Bauteilsorte mit einer oder mehreren weiteren Bauteilsorten beschreiben,
- **dass** in wenigstens einer Regel der Ausrichtungsbefehl eine koaxiale Ausrichtung erzwingt,
- **dass** in wenigstens einer Regel der Ausrichtungsbefehl eine deckungsgleiche oder parallele Ausrichtung von Ebenen erzwingt,
- und **dass** nach Abschluss der Eingabe aller Regeln für die Bauteile des Baukastens
o in einem ersten Schritt eine Stückliste des Getriebes eingegeben wird, wobei die Einträge der Stückliste jeweils wenigstens eine Zuordnung eines Bauteils zu einem Bauteilverwendungskennzeichen enthalten,
∘ in einem zweiten Schritt alle Regeln des Regelspeichers extrahiert werden, deren erstes Bauteilverwendungskennzeichen und zweites Bauteilverwendungskennzeichen in der Stückliste aufgeführt sind,
∘ in einem dritten Schritt die extrahierten Regeln auf die Bauteile der Stückliste angewendet werden, indem für jede Regel
dasjenige Bauteil als erstes Bauteil ermittelt wird, das in der Stückliste dem ersten Bauteilverwendungskennzeichen der Regel zugeordnet ist,
dasjenige Bauteil als zweites Bauteil ermittelt wird, das in der Stückliste dem zweiten Bauteilverwendungskennzeichen der Regel zugeordnet ist und das erste Bauteil und das zweite Bauteil zueinander ausgerichtet werden, indem durch den Ausrichtungsbefehl der Regel eine Ausrichtung der ersten Hilfsfigur der Regel am ersten Bauteil relativ zu der zweiten Hilfsfigur der Regel am zweiten Bauteil erzwungen wird,
wobei nach Abarbeitung aller extrahierten Regeln ein 3D-Modell der Konstruktionsvariante des Getriebes aus den Bauteilen zusammengesetzt ist,
∘ in einem vierten Schritt mit einer Kollisionsprüfung eine Reihenfolge der Demontageschritte des zusammengesetzten 3D-Modells automatisiert ermittelt wird
∘ und in einem fünften Schritt an ein Steuerungsgerät einer Anlage, die wenigstens ein Handhabungsgerät umfasst, die ermittelte Reihenfolge der Demontageschritte übergeben wird und das Steuerungsgerät die Anlage ansteuert und die ermittelte Reihenfolge der Demontageschritte in umgekehrter Reihenfolge abarbeitet und somit die Anlage das Getriebe montiert.

2. Verfahren nach Anspruch 1,
wobei die Konstruktionsvariante aus Bauteilen eines Baukastens zusammengesetzt ist, **dadurch gekennzeichnet, dass**
ein Benutzer eine Konstruktionsvariante konfiguriert, indem er eine Stückliste erstellt, und ein Rechnersystem aus einer Datenbank die CAD-Zeichnungen oder 3D-Modelle der in der Konstruktionsvariante vorgesehenen Bauteile bezieht und diese zu einer CAD-Zeichnung oder einem 3D-Modell der Konstruktionsvariante zusammensetzt, insbesondere mittels einer CAD-Standardsoftware.

3. Verfahren nach einem der vorangegangenen Ansprüche,
**dadurch gekennzeichnet, dass**
die Stückliste zu jedem Stücklisteneintrag eine Information über die Verwendung des betreffenden Bauteils in der Konstruktionsvariante enthält, insbesondere eine Objektklasse oder ein Bauteilverwendungskennzeichen,
und
die Ermittlung der Befehlssequenz anhand der in dem Stücklisteneintrag gegebenen Information über die Verwendung des betreffenden Bauteils in der Konstruktionsvariante, insbesondere die Objektklasse oder das Bauteilverwendungskennzeichen, erfolgt.

4. Verfahren nach einem der vorangegangenen Ansprüche,
**dadurch gekennzeichnet, dass**
die Befehlssequenz von einer CAD-Standardsoftware gelesen und ausgeführt wird,
und dass diese CAD-Standardsoftware zur Darstellung der CAD-Zeichnung oder zur Berechnung des 3D-Modells der Konstruktionsvariante verwendet wird.

5. Verfahren nach Anspruch 2,
**dadurch gekennzeichnet, dass**
auf eine erste Datenbank zugegriffen wird, in der Informationen, insbesondere CAD-Zeichnungen oder 3D-Modelle, zu allen Bauteilen des Baukastens abgelegt sind,
wobei jedes Bauteil durch eine Merkmalsmenge, insbesondere geometrische Hilfsfiguren in der jeweiligen CAD-Zeichnung oder des jeweiligen 3D-Modells, gekennzeichnet ist,
und auf eine zweite Datenbank zugegriffen wird, in welcher Objektklassen, insbesondere Bauteilverwendungskennzeichen, abgelegt sind,
wobei jede Objektklasse durch eine Merkmalsmenge gekennzeichnet ist,
wobei jeder Objektklasse mindestens ein Bauteil zuordenbar ist, wobei die Merkmalsmenge der Objektklasse eine Teilmenge der Merkmalsmenge des Bauteils ist,
und auf eine dritte Datenbank zugegriffen wird, in der Regeln abgelegt sind,
wobei jede Regel jeweils zwei Objektklassen in Bezug setzt, insbesondere zwei Merkmale aus den jeweiligen Merkmalsmengen von Bauteilen, die den Objektklassen jeweils zuordenbar sind.

6. Verfahren nach Anspruch 5,
**dadurch gekennzeichnet, dass**
in einem ersten Schritt aus einer ersten Datenbank die Bauteile für die Konstruktionsvariante ausgewählt werden und aus einer zweiten Datenbank für jedes ausgewählte Bauteil eine Objektklasse ausgewählt wird, insbesondere mittels eines Konfigurators,
dass in einem zweiten Schritt von einem Rechnersystem aus einer dritten Datenbank die Regeln für die ausgewählten Objektklassen ermittelt werden
und dass in einem dritten Schritt von einem Rechnersystem anhand der ermittelten Regeln aus CAD-Zeichnungen oder 3D-Modellen der ausgewählten Bauteile eine CAD-Zeichnung oder ein 3D-Modell der Konstruktionsvariante erstellt werden.

7. Verfahren nach einem der Ansprüche 5 oder 6,
**dadurch gekennzeichnet, dass**
zur Erstellung der CAD-Zeichnung oder des 3D-Modells eine CAD-Standardsoftware verwendet wird,
wobei in einem ersten Teilschritt des dritten Schrittes ein Rechnersystem die ermittelten Regeln sortiert und in einem zweiten Teilschritt des dritten Schrittes ein Rechnersystem die sortierten Regeln in Standard-Befehle der CAD-Standardsoftware übersetzt, insbesondere unter Beibehaltung der Sortierung,
insbesondere wobei in der ersten Datenbank die CAD-Zeichnungen oder 3D-Modelle, insbesondere Einzelteilzeichnungen, aller Bauteile vorgehalten werden und die CAD-Standardsoftware auf diese erste Datenbank zugreift.

8. Verfahren nach einem der Ansprüche 5 bis 7,
**dadurch gekennzeichnet, dass**
die in der ersten Datenbank abgelegten Merkmale zu jedem Bauteil Angaben zu geometrischen Hilfsfiguren in einer CAD-Zeichnung oder in einem 3D-Modell dieses Bauteils zur räumlichen Ausrichtung des Bauteils umfassen.

9. Verfahren nach einem der Ansprüche 5 bis 8,
**dadurch gekennzeichnet, dass**
die Regeln Verknüpfungen zwischen geometrischen Hilfsfiguren der Merkmalsmengen der betreffenden Objektklassen beschreiben.

10. Verfahren nach einem der Ansprüche 5 bis 9,
**dadurch gekennzeichnet, dass**
die im zweiten Schritt ermittelten Regeln für die ausgewählten Objektklassen mit einer Ordnungsrelation im ersten Teilschritt des dritten Schrittes geordnet werden, wobei die Ordnung die Abfolge der Verknüpfungsbefehle im zweiten Teilschritt des dritten Schrittes bestimmt.

11. Verfahren nach einem der Ansprüche 5 bis 10,
**dadurch gekennzeichnet, dass**
ein Darstellungs-Modul im zweiten Teilschritt des dritten Schritts auf die CAD-Standardsoftware zugreift, und
in dieser eine Baugruppe anlegt,
in die Baugruppe die Einzelteilzeichnungen der Bauteile der Konstruktionsvariante einlädt, in diesen gemäß der ermittelten Regeln die betreffenden Hilfsfiguren selektiert und diese gemäß den ermittelten Regeln verknüpft und/oder mustert und dass die CAD-Standardsoftware ein 3D-Modell der Konstruktionsvariante berechnet.

12. Verfahren nach einem der Ansprüche 5 bis 11,
**dadurch gekennzeichnet, dass**
nach Erstellung eines 3D-Modells der Konstruktionsvariante eine Kollisionsprüfung durchgeführt wird und dass eine Fehlermeldung ausgegeben wird, wenn die Kollisionsprüfung einen Fehler ergibt.

## Claims

1. Method for producing a design variant of a gearing of a product line using a data processing system,
the gearing being assembled from components of a modular system,
**characterised in that**
- auxiliary figures are assigned to each component of the modular system,
at least one component of the modular system being a shaft and the axis of symmetry of the shaft, or a cylindrical surface arranged concentrically therewith, being assigned to said shaft as an auxiliary figure
and at least one component of the modular system being a toothed part and at least one plane that encloses a side surface of the toothed part, or a plane extending in parallel therewith, being assigned to said toothed part as an auxiliary figure,
- **in that** rules are input into a rules memory by designating, for each rule, at least one first component usage code, a second component usage code, a first auxiliary figure, a second auxiliary figure and an orientation command, the orientation command forcing an orientation of the first auxiliary figure relative to the second auxiliary figure,
- **in that** component types are created from the components of the modular system, the same auxiliary figures being assigned to the components of a particular component type, and the component usage codes each being assigned to a component type and describing the connection of the component type to one or more other component types,
- **in that**, in at least one rule, the orientation command forces a coaxial orientation,
- **in that**, in at least one rule, the orientation command forces a congruent or parallel orientation of planes,
- and **in that**, once all the rules for the components of the modular system have been input,
∘ in a first step, a bill of materials of the gearing is input, each entry on the bill of materials including at least one assignment of a component to a component usage code,
∘ in a second step, all the rules in the rules memory whose first component usage code and second component usage code are listed on the bill of materials are extracted,
∘ in a third step, the extracted rules are applied to the components on the bill of materials by, for each rule,
determining the first component to be the component which, on the bill of materials, is assigned to the first component usage code of the rule,
determining the second component to be the component which, on the bill of materials, is assigned to the second component usage code of the rule,
and orienting the first component and the second component with respect to one another by the orientation command of the rule forcing an orientation of the first auxiliary figure of the rule on the first component relative to the second auxiliary figure of the rule on the second component,
a 3D model of the design variant of the gearing being assembled from the components once all the extracted rules have been executed,
∘ in a fourth step comprising a collision test, a sequence of disassembly steps of the assembled 3D model is determined in an automated manner
∘ and in a fifth step, the determined sequence of disassembly steps is sent to a control device of a system comprising at least one handling device, and the control device actuates the system and executes the determined sequence of disassembly steps in reverse order, and thus the system puts the gearing together.

2. Method according to claim 1,
the design variant being assembled from components of a modular system,
**characterised in that**
a user configures a design variant by preparing a bill of materials, and a computer system obtains the CAD drawings or 3D models of the components provided in the design variant from a database and compiles them into a CAD drawing or 3D model of the design variant, in particular by means of standard CAD software.

3. Method according to any of the preceding claims,
**characterised in that**
for each bill of materials entry, the bill of materials contains information on the use of the relevant component in the design variant, in particular an object class or a component usage code,
and
the command sequence is determined on the basis of the information stated in the bill of materials entry regarding the use of the relevant component in the design variant, in particular the object class or the component usage code.

4. Method according to any of the preceding claims,
**characterised in that**
the command sequence is read and executed by standard CAD software, and **in that** this standard CAD software is used to display the CAD drawing or to compute the 3D model of the design variant.

5. Method according to claim 2,
**characterised in that**
a first database, in which information, in particular CAD drawings or 3D models, on all the components of the modular system is stored, is accessed,
each component being marked by a feature quantity, in particular geometric auxiliary figures in the relevant CAD drawing or 3D model,
and a second database, in which object classes, in particular component usage codes, are stored, is accessed,
each object class being marked by a feature quantity,
at least one component being able to be assigned to each object class, the feature quantity of the object class being a sub-quantity of the feature quantity of the component,
and a third database, in which rules are stored, is accessed,
each rule linking two object classes in each case, in particular two features from the relevant feature quantities of each component that can be assigned to the object classes.

6. Method according to claim 5,
**characterised in that**
in a first step, the components for the design variant are selected from a first database, and for each selected component an object class is selected from a second database, in particular by means of a configurator,
**in that**, in a second step, a computer system determines the rules for the selected object classes from a third database,
and **in that**, in a third step, on the basis of the determined rules, a computer system prepares a CAD drawing or 3D model of the design variant from CAD drawings or 3D models of the selected components.

7. Method according to any of claims 5 or 6,
**characterised in that**
standard CAD software is used to prepare the CAD drawing or 3D model,
a computer system sorting the determined rules in a first sub-step of the third step, and a computer system translating the sorted rules into standard commands for the standard CAD software in a second sub-step of the third step, in particular while maintaining the sorting, the CAD drawings or 3D models, in particular individual part-drawings, of all the components in particular being kept available in the first database and the standard CAD software accessing this first database.

8. Method according to any of claims 5 to 7,
**characterised in that**
the features stored in the first database regarding each component include information on geometric auxiliary figures in a CAD drawing or 3D model of that component for the spatial orientation of the component.

9. Method according to any of claims 5 to 8,
**characterised in that**
the rules describe links between geometric auxiliary figures of the feature quantities of the relevant object classes.

10. Method according to any of claims 5 to 9,
**characterised in that**
in the first sub-step of the third step, the rules determined in the second step for the selected object classes are ordered using an ordering relationship, the order defining the sequence of the linking commands in the second sub-step of the third step.

11. Method according to any of claims 5 to 10,
**characterised in that**
in the second sub-step of the third step, a display module accesses the standard CAD software, and
positions an assembly therein,
loads the individual part-drawings of the components of the design variant into the assembly, selects the relevant auxiliary figures therein in accordance with the determined rules and links and/or surveys them in accordance with the determined rules and **in that** the standard CAD software computes a 3D model of the design variant.

12. Method according to any of claims 5 to 11,
**characterised in that**
once a 3D model of the design variant has been prepared, a collision test is carried out, and **in that** an error message is issued if a collision test shows an error.

## Revendications

1. Procédé de fabrication d'une variante de construction d'une transmission d'une série en utilisant un ordinateur, la transmission étant composée de composants d'un système modulaire,
**caractérisé en ce**
- **que** des figures auxiliaires sont associées à chaque composant du système modulaire,
au moins un composant du système modulaire étant un arbre et l'axe de symétrie de l'arbre ou une surface cylindrique disposée concentriquement à cet axe de symétrie étant associé(e) à cet arbre en tant que figure auxiliaire,
et au moins un composant du système modulaire étant une partie dentée et au moins un plan comprenant une surface latérale de la partie dentée ou un plan s'étendant parallèlement à celle-ci étant associé à cette partie dentée en tant que figure auxiliaire,
- **que** des règles sont entrées dans une mémoire de règles en désignant pour chaque règle au moins un premier identificateur d'utilisation de composant, un deuxième identificateur d'utilisation de composant, une première figure auxiliaire, une deuxième figure auxiliaire et une instruction d'orientation, l'instruction d'orientation imposant une orientation de la première figure auxiliaire par rapport à la deuxième figure auxiliaire,
- **que** des types de composant sont formés à partir des composants du système modulaire, les composants d'un type de composant respectif étant associés à des figures auxiliaires identiques et les identificateurs d'utilisation de composant étant chacun associés à un type de composant et décrivant la relation du type de composant avec un ou plusieurs autres types de composants,
- **que**, dans au moins une règle, l'instruction d'orientation impose une orientation coaxiale,
- **que**, dans au moins une règle, l'instruction d'orientation impose une orientation congruente ou parallèle de plans,
- et **que**, à l'issue de l'entrée de toutes les règles pour les composants du système modulaire
∘ dans une première étape, une liste de pièces de la transmission est entrée, les entrées de la liste de pièces contenant chacune au moins une association d'un composant à un identificateur d'utilisation de composant,
∘ dans une deuxième étape, toutes les règles de la mémoire de règles dont le premier identificateur d'utilisation de composant et le deuxième identificateur d'utilisation de composant figurent dans la liste de pièces sont extraites,
∘ dans une troisième étape, les règles extraites sont appliquées aux composants de la liste de pièces par le fait que, pour chaque règle,
on détermine comme premier composant le composant qui est associé au premier identificateur d'utilisation de composant de la règle dans la liste de pièces,
on détermine comme deuxième composant le composant qui est associé au deuxième identificateur d'utilisation de composant de la règle dans la liste de pièces,
et le premier composant et le deuxième composant sont orientés l'un par rapport à l'autre par le fait que l'instruction d'orientation de la règle impose une orientation de la première figure auxiliaire de la règle sur le premier composant par rapport à la deuxième figure auxiliaire de la règle sur le deuxième composant,
de sorte qu'après traitement de toutes les règles extraites, un modèle 3D de la variante de construction de la transmission est assemblé à partir des composants,
∘ dans une quatrième étape, un ordre des étapes de démontage du modèle 3D assemblé est déterminé automatiquement au moyen d'un contrôle de collision
∘ et, dans une cinquième étape, l'ordre déterminé des étapes de démontage est transmis à un dispositif de commande d'une installation qui comprend au moins un dispositif de manipulation, et le dispositif de commande active l'installation et traite l'ordre déterminé des étapes de démontage dans l'ordre inverse et l'installation monte ainsi la transmission.

2. Procédé selon la revendication 1,
dans lequel la variante de construction est assemblée à partir de composants d'un système modulaire,
**caractérisé en ce**
**qu'**un utilisateur configure une variante de construction en créant une liste de pièces et un système informatique récupère les dessins de CAO ou les modèles 3D des composants prévus dans la variante de construction à partir d'une base de données et les assemble pour former un dessin de CAO ou un modèle 3D de la variante de construction, en particulier au moyen d'un logiciel de CAO standard.

3. Procédé selon l'une des revendications précédentes,
**caractérisé en ce**
**que** la liste de pièces contient pour chaque entrée de liste de pièces une information sur l'utilisation du composant concerné dans la variante de construction, en particulier une classe d'objets ou un identificateur d'utilisation de composant, et
**que** la détermination de l'ordre des instructions est effectuée à l'aide de l'information donnée dans l'entrée de liste de pièces sur l'utilisation du composant concerné dans la variante de construction, en particulier la classe d'objets ou l'identificateur d'utilisation de composant.

4. Procédé selon l'une des revendications précédentes,
**caractérisé en ce**
**que** l'ordre des instructions est lu et exécuté par un logiciel de CAO standard,
et **que** ce logiciel de CAO standard est utilisé pour représenter le dessin de CAO ou pour calculer le modèle 3D de la variante de construction.

5. Procédé selon la revendication 2,
**caractérisé en ce**
**que** l'on accède à une première base de données dans laquelle sont stockées des informations, en particulier des dessins de CAO ou des modèles 3D, pour tous les composants du système modulaire,
chaque composant étant **caractérisé par** un ensemble de caractéristiques, en particulier des figures auxiliaires géométriques dans le dessin de CAO respectif ou du modèle 3D respectif,
et que l'on accède à une deuxième base de données dans laquelle sont stockées des classes d'objets, en particulier des identificateurs d'utilisation de composant,
chaque classe d'objets étant **caractérisée par** un ensemble de caractéristiques,
au moins un composant pouvant être associé à chaque classe d'objets, l'ensemble de caractéristiques de la classe d'objets étant un sous-ensemble de l'ensemble de caractéristiques du composant,
et que l'on accède à une troisième base de données dans laquelle sont stockées des règles, chaque règle mettant en relation deux classes d'objets, en particulier deux caractéristiques des ensembles de caractéristiques respectifs de composants qui peuvent être associés aux classes d'objets.

6. Procédé selon la revendication 5,
**caractérisé en ce**
**que** dans une première étape, les composants pour la variante de construction sont sélectionnés dans une première base de données et une classe d'objets est sélectionnée dans une deuxième base de données pour chaque composant sélectionné, en particulier au moyen d'un configurateur,
**que** dans une deuxième étape, les règles pour les classes d'objets sélectionnées sont déterminées par un système informatique à partir d'une troisième base de données,
et **que** dans une troisième étape, un dessin de CAO ou un modèle 3D de la variante de construction est créé par un système informatique, à l'aide des règles déterminées, à partir de dessins de CAO ou de modèles 3D des composants sélectionnés.

7. Procédé selon l'une des revendications 5 ou 6,
**caractérisé en ce**
**qu'**un logiciel de CAO standard est utilisé pour créer le dessin de CAO ou le modèle 3D,
dans lequel, dans une première sous-étape de la troisième étape, un système informatique trie les règles déterminées et, dans une deuxième sous-étape de la troisième étape, un système informatique traduit les règles triées en instructions standard du logiciel de CAO standard, en particulier en conservant le tri,
en particulier dans lequel les dessins de CAO ou les modèles 3D, en particulier des dessins d'éléments individuels, de tous les composants sont tenus à disposition dans la première base de données et le logiciel de CAO standard accède à cette première base de données.

8. Procédé selon l'une des revendications 5 à 7,
**caractérisé en ce**
**que** les caractéristiques de chaque composant stockées dans la première base de données comprennent des indications sur des figures auxiliaires géométriques dans un dessin de CAO ou dans un modèle 3D de ce composant pour l'orientation spatiale du composant.

9. Procédé selon l'une des revendications 5 à 8,
**caractérisé en ce**
**que** les règles décrivent des liaisons entre les figures auxiliaires géométriques des ensembles de caractéristiques des classes d'objets concernées.

10. Procédé selon l'une des revendications 5 à 9,
**caractérisé en ce**
**que** les règles déterminées dans la deuxième étape sont ordonnées pour les classes d'objets sélectionnées avec une relation d'ordre dans la première sous-étape de la troisième étape, l'ordre déterminant la succession des instructions de liaison dans la deuxième sous-étape de la troisième étape.

11. Procédé selon l'une des revendications 5 à 10,
**caractérisé en ce**
**qu'**un module de représentation accède au logiciel de CAO standard dans la deuxième sous-étape de la troisième étape, et
crée un sous-ensemble dans celui-ci,
charge les dessins d'éléments individuels des composants de la variante de construction dans le sous-ensemble,
sélectionne dans ceux-ci les figures auxiliaires concernées selon les règles déterminées et les relie et/ou les met en motif selon les règles déterminées,
et **que** le logiciel de CAO standard calcule un modèle 3D de la variante de construction.

12. Procédé selon l'une des revendications 5 à 11,
**caractérisé en ce**
**qu'**après la création d'un modèle 3D de la variante de construction, un contrôle de collision est effectué et qu'un message d'erreur est émis si le contrôle de collision révèle une erreur.
